# EUROPÄISCHE PATENTSCHRIFT

(11) **EP 3 532 728 B1**
(45) Veröffentlichungstag und Bekanntmachung des Hinweises auf die Patenterteilung: **07.06.2023**
(21) Anmeldenummer: 17787407.0
(22) Anmeldetag: 23.10.2017
(51) Int. Cl.: F04C 2/12, F04C 15/00, F16J 15/34

(54) **DREHKOLBENPUMPE MIT SPERRKAMMERDICHTUNG**
ROTARY PISTON PUMP HAVING A SEALING CHAMBER SEAL
POMPE À PISTON ROTATIF MUNIE D'UNE GARNITURE D'ÉTANCHÉITÉ À CHAMBRE DE BARRAGE

(30) Priorität: 31.10.2016 DE 202016106107 U
(43) Veröffentlichungstag der Anmeldung: 04.09.2019
(73) Patentinhaber: Vogelsang GmbH & Co. KG, 49632 Essen (DE)
(72) Erfinder: KRAMPE, Paul, 49632 Essen/Oldb. (DE); BURHORST, Torsten, 49632 Essen/Oldb. (DE)
(74) Vertreter: Eisenführ Speiser
(86) Internationale Anmeldenummer: PCT/EP2017/076956
(87) Internationale Veröffentlichungsnummer: WO 2018/077778

(56) Entgegenhaltungen:
- EP-A1- 0 814 267
- EP-A1- 2 306 027
- WO-A1-89/08798
- DE-A1- 3 007 267
- GB-A- 2 395 532

## Beschreibung

Die Erfindung betrifft eine Dichtungsanordnung für eine Drehkolbenpumpe. Ferner betrifft die Erfindung eine Drehkolbenpumpe und eine Dichtungspatrone für eine Dichtungsanordnung.

Drehkolbenpumpen sind nach dem Verdrängerprinzip arbeitende Pumpen, die mittels zweier um parallele, beabstandete Achsen rotierende Drehkolben, die im gegenseitigen Eingriff zueinander stehen, eine Verdrängung des gepumpten Fluids zwischen den Drehkolben bewirken und das Fluid in den einander gegenüberliegenden Außenumfangsbereichen der Drehkolben fördern. Die Drehkolben sind in einem Pumpengehäuse angeordnet. Sie sind drehbar gelagert, typischerweise indem die Drehkolben auf Wellen befestigt sind, die zumindest einseitig, in der Regel beidseitig, in Lagern, beispielsweise Wälzlagern oder Gleitlagern, drehbar gelagert sind. Der Antrieb der Drehkolben erfolgt durch eine der beiden Wellen oder beide Wellen, indem diese Wellen mit einem Antriebsmittel gekoppelt werden. Beispielsweise kann eine Welle sich aus dem Gehäuse heraus erstrecken und mit einer Zapfwelle verbunden sein, oder die sich herausstreckende Welle kann direkt oder indirekt mit einem pumpeneigenen Antriebsmotor gekoppelt sein. Häufig sind Drehkolbenpumpen zusätzlich mit einem Synchronisationsgetriebe ausgerüstet. Hierbei handelt es sich um zwei auf den Wellen befestigte Zahnräder, die miteinander im Eingriff stehen und eine synchrone Drehbewegung der beiden Drehkolben herstellen.

Drehkolbenpumpen werden häufig zum Einsatz partikelhaltiger Flüssigkeiten eingesetzt, beispielsweise Flüssigkeiten, die Sandpartikel oder sonstige Feststoffe in Partikelform oder in gröberer Form mit sich führen. Je nach Pumpwiderstand in Form eines Gegendrucks in der Ausgangsleitung können im Pumpengehäuse hierbei erhebliche Überdrücke auftreten. Generell ist es für die Lebensdauer von sowohl den Lagerungen der Wellen als auch dem Antriebsmittel und dem Synchronisationsgetriebe nachteilhaft, wenn das gepumpte Förderfluid unter solchen Druckbedingungen aus dem Pumpengehäuse in den Bereich der Lagerungen, des Antriebsmittels oder des Synchronisationsgetriebes vordringen könnte. Das Synchronisationsgetriebe, häufig auch die Lagerungen, sind mit einem speziellen Schmiermedium geschmiert, welches eine hohe Lebensdauer dieser Komponenten gewährleistet. Durch Eindringen von gepumptem Förderfluid oder Partikeln aus diesem Förderfluid in dieses Schmiermittel würde die Lebensdauer erheblich herabgesetzt.

Es ist grundsätzlich bekannt, dem Eindringen von Pumpförderfluid in die verschmutzungsempfindlichen Bereiche wie Lagerung, Synchronisationsgetriebe und Antrieb durch Anordnen eines Radialwellendichtrings und gegebenenfalls weiterer Gleitringdichtungsanordnungen vorzubeugen. Während solche Dichtungsanordnungen bei Betrieb der Pumpe in niedrigen Differenzdrücken noch häufig eine ausreichende Abdichtung bewirken können, kommt es bereits unter solchen Normalbedingungen, insbesondere jedoch bei hohen Differenzdrücken und Überdrücken im Pumpengehäuse zum Eindringen von Pumpförderfluid und darin enthaltenen Partikeln in die Lagerungskomponenten, das Synchronisationsgetriebe oder die Antriebseinrichtung der Drehkolbenpumpe. Dies beeinträchtigt erheblich die Lebensdauer dieser Bauteile.

Aus EP 2 306 027 A1 ist ein Schraubenkompressor vorbekannt, der ein Wellendichtungselement aufweist, das einen Lagerraum von einer Rotorkammer abdichtet. Bei diesem Schraubenkompressor ist ein Zufuhrmittel für ein Rotorschmierfluid vorgesehen, welches das Rotorschmierfluid in die Rotorkammer einbringt und ein Lagerschmiersystem, welches ein Lagerschmierfluid in den Lagerraum einbringt und aus dem Lagerraum abgegebenes Lagerschmierfluid in den Lagerraum zurückführt.

Aus DE 30 072 067 A1 ist eine Wellendichtung für Wälzkolbenpumpen vorbekannt, die aus zwei Wellendichtringen mit einer zugewandten Dichtlippen besteht und zwischen diesen Wellendichtringen einen im Wesentlichen ringförmigen Zwischenraum aufweist. Zwecks Aufrechterhaltung einer ständigen Schmier- und Kühlmittelströmung durch den Zwischenraum sind mindestens ein Zuführungskanal und ein Abführungskanal für das Schmier-bzw. Kühlmedium vorgesehen.

Aus GB 2 395 532 A ist eine Abdichtungsvorrichtung für Rotationskomponenten vorbekannt, die einen Sensor umfasst, der ausgebildet ist, um die Funktionsfähigkeit der Abdichtungsvorrichtung zu erfassen.

Aufgabe der Erfindung ist es, eine Drehkolbenpumpe mit verbesserter Lebensdauer auch bei einem insbesondere hohen Überdruck im Pumpengehäuse der Drehkolbenpumpe bereitzustellen.

Erfindungsgemäß wird eine Dichtungsanordnung bereitgestellt, die eine zuverlässige Abdichtung des Bereichs zwischen dem Pumpförderfluid und den für Lagerung, Synchronisation und Antrieb zuständigen Bauteilen erreicht. Diese Dichtungswirkung wird entlang der Pumpenwelle erzielt, worunter eine Dichtung gegen Fluidaustritt entlang der Pumpenwellenoberfläche oder entlang der Oberfläche von Bauteilen, die sich mit der Pumpenwelle mitdrehen, verstanden wird. Die erfindungsgemäße Dichtungsanordnung umfasst eine Dichtungsfluid-Pumpvorrichtung, die in unterschiedlicher Weise ausgebildet sein kann. Generell weist die Dichtungsfluid-Pumpvorrichtung einen Pumpeneinlass und einen Pumpenauslass auf, und durch die Funktion der Dichtungsfluid-Pumpvorrichtung wird zwischen diesem Ein- und Auslass eine Fluiddruckdifferenz erzeugt. Die Dichtungsfluid-Pumpvorrichtung kann beispielsweise durch einen Kolben, der über zwei Rückschlagventile Pumpenfluid aus dem Pumpeneinlass ansaugt und in den Pumpenauslass fördert, bei gleichzeitiger Sperrung der Rückflussrichtung zurück in den Pumpeneinlass oder aus dem Pumpenauslass, gebildet werden. Anstelle von solchen Rückschlagventilen können auch gesteuerte Ventile, die durch eine Steuerstange, die ebenfalls über das Exzenterelement bewegt wird, realisiert sein oder andere Ausführungsformen.

Die Dichtungsfluid-Pumpvorrichtung erzeugt einen Fluiddruck und gegebenenfalls einen Fluidfluss eines Dichtungsfluids. Dieses Dichtungsfluid ist auch in einer Sperrkammer, die mit dem Pumpenauslass verbunden ist, vorhanden und erzeugt hierdurch einen Fluiddruck innerhalb dieser Sperrkammer. Die Sperrkammer ist als abdichtende Barriere zwischen der Pumpkammer und einem gegenüber dem Pumpförderfluid abzudichtenden Raum, also insbesondere einem Lagerungsbereich, einem Synchronisationsgetriebe oder einem Antriebselement, angeordnet. Die Druckkammer ist mittels Dichtelementen gegenüber zumindest der Pumpkammer abgedichtet.

Durch diese Ausgestaltung einer druckbeaufschlagten Sperrkammer bei gleichzeitigem Antrieb der den Druck in der Sperrkammer erzeugenden Pumpeinheit über die Antriebswelle der Drehkolben wird eine Konstellation erzeugt, die eine besonders zuverlässige Abdichtung der Pumpkammer gegen den Austritt von Pumpförderfluid erreicht. Die Sperrkammer bildet ihrerseits einen druckgefüllten Raum, dessen Innendruck zudem vom Betriebszustand der Pumpe abhängig gemacht werden kann. So ist es beispielsweise möglich, die Geschwindigkeit des Druckaufbaus, den Volumenstrom innerhalb der des Dichtungsfluids Sperrkammer oder den Druck innerhalb der Sperrkammer von der Drehzahl der Drehkolbenpumpe abhängig zu steuern. Zwischen Sperrkammer und Pumpkammer kann daher ein hoher Differenzdruck vermieden werden, auch wenn die Pumpkammer gegen hohe Widerstände fördert. Stattdessen wird durch den aufgebauten Druck in der Sperrkammer der Differenzdruck zwischen Pumpkammer und Sperrkammer gering gehalten. Dies bewirkt eine zuverlässige Abdichtung der Pumpkammer.

Es ist zu verstehen, dass die Sperrkammer insbesondere auch eine beidseitige Abdichtung aufweisen kann, also eine Abdichtung sowohl zur Pumpkammer als auch eine Abdichtung gegenüber der Komponente, die gegenüber der Pumpkammer abzudichten ist, also beispielsweise des Lagerungsbauteils, des Synchronisationsgetriebes oder eines Antriebselements. Hierdurch wird auch der Austritt von Dichtungsfluid aus der Sperrkammer zu dem abzudichtenden Bauteil verhindert und umgekehrt der Zutritt von Fluiden oder Partikeln in die Sperrkammer von dieser Seite verhindert. Grundsätzlich ist aber zu verstehen, dass die Sperrkammer auch mit einem Dichtungsfluid gefüllt werden kann, welches dem Schmiermittel des jeweiligen Bauteils entspricht, also beispielsweise einem Getriebeöl in einem Synchronisationsgetriebe oder einer Lagerungskomponente, sodass auf eine separate Abdichtung zwischen Sperrkammer und diesem Bauteil in bestimmten Anwendungen auch verzichtet werden kann.

Besonders bevorzugt ist es, wenn die Dichtungsfluid-Pumpvorrichtung ein Exzenterelement mit einer exzentrisch zu einer Rotationsachse umlaufenden Exzenterumfangsfläche, einen mit dem Exzenterelement gekoppelten Flanschanschluss, der zur drehmomentfesten Verbindung mit einer aus einer Pumpkammer der Drehkolbenpumpe herausführenden Pumpenwelle der Drehkolbenpumpe ausgebildet ist, eine Pumpeinheit, die mit dem Exzenterelement gekoppelt ist, den Pumpeneinlass und den Pumpenauslass aufweist und ausgebildet ist, um bei Rotation des Exzenterelements in einem Dichtungsfluid eine Fluiddruckdifferenz zwischen Pumpeneinlass und Pumpenauslass zu erzeugen, umfasst.

Die Dichtungsfluid-Pumpvorrichtung umfasst gemäß dieser Ausführungsform ein Exzenterelement mit einer exzentrisch zu einer Rotationsachse umlaufenden Exzenterumfangsfläche. Dieses Exzenterelement kann beispielsweise durch ein Nockenelement gebildet werden, das eine Nockenerhebung aufweist, also einen Bereich, der gegenüber dem anderen Umfangsbereich einen größeren Umfangsradius aufweist. Das Exzenterelement kann auch durch rotationssymmetrische Körper, beispielsweise ein Bauteil mit zwei um 180° in Umfangsrichtung versetzten Nockenelementen, drei oder vier solchen Nockenelementen nach Art eines Mehrfachnockenelements oder einer Kurvenscheibe ausgeführt sein. Das Exzenterelement kann ebenso gut durch eine Scheibe mit kreisförmigem Umfangsabschnitt gebildet werden, die exzentrisch zu ihrem Mittelpunkt an der Rotationsachse befestigt ist und deren Umfangsfläche hierdurch eine Exzenterbahn beschreibt. Maßgeblich für die Funktion des Exzenterelements ist es, dass bei dessen Rotation an einer Fläche des Exzenterelements eine zyklische Bewegung erreicht wird, diese Fläche kann insbesondere durch eine Umfangsfläche, jedoch auch durch eine axiale Fläche oder eine axial-radiale Fläche gebildet werden.

Das Exzenterelement ist mit einem Flanschanschluss gekoppelt, also beispielsweise einstückig mit einem solchen Flanschanschluss ausgebildet oder an einem separaten Flansch drehmomentfest befestigt. Dieser Flanschanschluss ermöglicht es, das Exzenterelement drehmomentfest mit einer Pumpenwelle der Drehkolbenpumpe zu verbinden, sodass das Exzenterelement durch die Rotation der Pumpenwelle auch in Rotation versetzt wird. Das Exzenterelement kann direkt auf der Pumpenwelle befestigt sein oder über ein Getriebe oder dergleichen mit der Pumpenwelle drehmomentfest gekoppelt sein.

Gemäß einer hierzu weiteren Ausführungsform umfasst die Pumpeinheit einen Exzenterstift, der an einem ersten Exzenterstiftende auf der Exzenterumfangsfläche des Exzenterelements anliegt, einen Pumpkolben, mit einer ersten Kolbenfläche, die mit einem zweiten Exzenterstiftende zusammenwirkt und einen mit dem Pumpenauslass verbundenen Pumpenraum begrenzt, ein Vorspannungselement, das mit einer zweiten Kolbenfläche, die in Kolbenlängsachse gegenüberliegend zur ersten Kolbenfläche angeordnet ist, zusammenwirkt, und den Pumpkolben elastisch radial in Richtung auf die Exzenterumfangsfläche vorspannt, einen die erste mit der zweiten Kolbenfläche verbindenden Durchtrittskanal durch den Pumpkolben, der durch ein in eine Schließstellung vorgespanntes Pumpkolbenventil verschlossen wird, wobei das Pumpkolbenventil einen Ventilkörper mit einer Ventilkörperfläche aufweist, die bei Beaufschlagung der ersten Kolbenfläche mit einem Unterdruck eine Öffnungskraft auf den Ventilkörper bewirkt, die gegen die in Schließstellung wirkende Vorspannung gerichtet ist, und die elastische Kraft des Vorspannungselements eine auf den Pumpkolben wirkende Kraft ausübt, die auf ein in dem Pumpenraum befindliches Fluid einen Fluiddruck ausübt. Gemäß dieser Ausführungsform wird die Pumpeinheit durch eine Anordnung eines Exzenterstiftes und eines Pumpkolbens verwirklicht, die einander anliegend ausgeführt sind, wobei der Exzenterstift an der Exzenterumfangsfläche des Exzenterelements anliegt. Diese mechanische Kette wird durch ein Vorspannungselement solcherart vorgespannt, dass eine Anlage an der Exzenterumfangsfläche durch die Vorspannung realisiert wird. Der Pumpkolben weist hierbei ein Pumpkolbenventil auf, das bei reziproker Hubbewegung des Pumpkolbens wechselweise ein Ansaugen von Dichtungsfluid in den Pumpenraum ermöglicht, indem es sich durch den Unterdruck, der durch den Hub des Pumpkolbens erzeugt wird, öffnet und hierauf folgend ein Aufbauen von Druck im Pumpenraum erlaubt, indem es sich bei Abfall des Unterdrucks und Aufbau des Überdrucks infolge einer reziproken Pumpkolbenbewegung schließt. Diese Ausführungsform ermöglicht einerseits eine zuverlässige und robuste Förderwirkung und einen entsprechend zuverlässigen Druckaufbau im Dichtungsfluid und kann andererseits bereits durch die Wirkung des Pumpkolbenventils eine Begrenzung des Drucks bewirken, indem bei Aufbau von Überdruck im Pumpenraum die Förderwirkung aufgrund des dann nicht mehr erfolgenden Ansaugens von Dichtungsfluid verhindert wird.

Gemäß einer weiteren bevorzugten Ausführungsform wird die Dichtungsanordnung dadurch fortgebildet, dass die Sperrkammer als durchströmte Sperrkammer ausgebildet ist und zumindest eine Gleitringdichtung aufweist und die Gleitringdichtung durch einen aus dem Fluiddruck resultierenden Fluidstrom des Dichtungsfluids geschmiert wird. Gemäß dieser Ausführungsform wird die Sperrkammer von dem Dichtungsfluid durchströmt. Dabei ist unter einer Durchströmung zu verstehen, dass die Sperrkammer einerseits mit einem Zulauf und einem Ablauf ausgerüstet sein kann, sodass das Dichtungsfluid in einem Kreislauf durch die Dichtungsfluid-Pumpvorrichtung gefördert werden kann. Unter einer Durchströmung ist hierbei aber auch zu verstehen, dass die Sperrkammer lediglich einen Zulauf hat und eine geringe Menge an Leckage durch Dichtungen, welche die Sperrkammer abdichten, nach außen dringt. Dies ist beispielsweise bei Gleitringdichtungen von Vorteil, um eine zuverlässige Leckagerichtung herzustellen, mit der verhindert wird, dass das Pumpförderfluid und darin enthaltene Partikel in den Bereich der Gleitringdichtung gelangen und diese beschädigen oder deren Dichtungswirkung herabsetzen können. Dabei ist zu verstehen, dass die Dichtungsanordnung mit einer kontinuierlichen Nachspeisung von Dichtungsfluid aus einem Reservoir ausgerüstet sein kann. Weiterhin ist zu verstehen, dass die Durchströmung der Sperrkammer mit einem nur geringen Volumenstrom für typische Anwendungsfälle ausreichend ist, um die gewünschten Wirkungen, nämlich ein Verhindern des Eindringens von Partikeln oder Pumpförderfluid in die Sperrkammer und einen kontinuierlichen Durchsatz des Dichtungsfluids durch die Sperrkammer, zu erreichen. Grundsätzlich kann der Volumenstrom durch die Sperrkammer druckgeregelt oder volumengeregelt ausgeführt sein, in entsprechender Weise kann die Dichtungsfluid-Pumpvorrichtung ausgebildet sein, um ein vorbestimmtes Volumen pro Zeiteinheit zu fördern oder um einen vorbestimmten Druck aufrechtzuerhalten.

Gemäß einer weiteren bevorzugten Ausführungsform ist vorgesehen, dass die Sperrkammer als geschlossene Sperrkammer ausgebildet ist und in der Sperrkammer mittels der von der Dichtungsfluid-Pumpvorrichtung erzeugten Fluiddruckdifferenz ein vorbestimmter Fluiddruck aufrechterhalten wird. Bei dieser Ausführungsform ist eine Durchströmung der Sperrkammer nicht vorgesehen, sondern die Dichtungsfluid-Pumpvorrichtung hält einen konstanten Druck in der Sperrkammer aufrecht, ohne hierbei das Dichtungsfluid als Volumenstrom zu fördern oder zu zirkulieren. Diese Ausführungsform eignet sich insbesondere für Anwendungen, bei denen ein Leckagedurchtritt durch Dichtungen aus der Sperrkammer heraus nicht erwünscht ist, um eine Kontaminierung der Umgebung oder des Pumpförderfluids zu vermeiden. Ebenfalls vorteilhaft ist an dieser Ausführungsform, dass ein Nachführen von Dichtungsfluid nicht erforderlich ist, sondern der Betrieb der Dichtungsanordnung mit einer Dauerdichtungsfluidfüllung ausgeführt werden kann.

Gemäß einer weiteren bevorzugten Ausführungsform ist vorgesehen, dass die Dichtungsfluid-Pumpvorrichtung eine Einstellvorrichtung zur Begrenzung des in der Sperrkammer erzeugten Fluiddrucks aufweist. Eine solche Vorrichtung zur Begrenzung des Fluiddrucks kann durch ein Überdruckventil, vorzugsweise ein einstellbares Überdruckventil, welches das Dichtungsfluid in einen Bypass-Kanal durchlässt, ausgeführt sein. In anderen Ausführungsformen ist es vorteilhaft, wenn die Einstellvorrichtung mit der Dichtungsfluid-Pumpvorrichtung solcherart zusammenwirkt, dass bei Erreichen oder Überschreiten eines bestimmten Fluiddrucks im Dichtungsfluid die Pumpwirkung der Dichtungsfluid-Pumpvorrichtung reduziert oder zu Null gesetzt wird, beispielsweise indem der Hub eines Pumpkolbens in Abhängigkeit des Fluiddrucks im Dichtungsfluid beeinflusst oder geregelt wird. Durch diese Fortbildung wird erreicht, dass ein vorbestimmter, insbesondere ein einstellbarer Druck im Dichtungsfluid während des Betriebs vorherrscht, sodass die Wirkung der Dichtung optimal auf eine bestimmte Drehkolbenpumpe oder einen bestimmten Betriebszustand an der Drehkolbenpumpe abgestimmt werden kann.

Erfindungsgemäß ist vorgesehen, dass die Dichtungsfluid-Pumpvorrichtung ausgebildet ist, um bei Überschreitung eines vorbestimmten Fluiddrucks in der Sperrkammer den Durchtritt von Fluid vom Pumpenauslass zum Pumpeneinlass freizugeben und solcherart einen Rückfluss von Fluid aus unter Umgehung der Dichtungsfluid-Pumpvorrichtung zu eröffnen. Mit dieser Ausführungsform wird eine zuverlässige Steuerung des Drucks des Dichtungsfluids erreicht, indem bei Erreichen bzw. Überschreiten eines bestimmten Drucks ein Rückfluss vom Auslass zum Einlass der Dichtungsfluid-Pumpvorrichtung freigegeben wird, was zu einem Druckabfall bzw. einer Druckbegrenzung führt. Diese Ausführungsform kann beispielsweise durch ein in die Dichtungsfluid-Pumpvorrichtung integriertes Rückschlagventil verwirklicht werden, welches eine entsprechende Leitung, die den Auslass mit dem Einlass verbindet, eingesetzt ist und das bei einem bestimmten Druck öffnet und hierdurch diese Leitung freigibt.

Noch weiter ist es bevorzugt, dass der Pumpeneinlass mit einem Fluidreservoir verbunden ist. Durch Bereitstellung eines solchen Fluidreservoirs kann eine Reservemenge an Dichtungsfluid vorgehalten werden und hierdurch etwaigen Verlusten an Dichtungsfluid durch Leckagen vorgebeugt werden. Dabei ist zu verstehen, dass der Pumpeneinlass einerseits mit dem Fluidreservoir verbunden sein kann, andererseits aber auch mit einem Zulauf aus der Sperrkammer verbunden sein kann, insbesondere wenn ein entsprechender Kreislauf an Dichtungsfluid vorgesehen ist. Das Reservoir kann dabei so angeordnet sein, dass es stromaufwärts von einer Einmündungsstelle des Rücklaufs aus der Sperrkammer angeordnet ist, ebenso kann der Rücklauf aus der Sperrkammer in das Reservoir münden, sodass das Reservoir laufend durchströmt wird, wenn ein Kreislauf durch die Dichtungsfluid-Pumpvorrichtung und die Sperrkammer ausgeführt wird.

Gemäß einer weiteren Fortbildungsform hierzu ist vorgesehen, dass das Fluidreservoir über ein Druckbegrenzungsventil mit der Sperrkammer verbunden ist. Gemäß dieser Ausführungsform fördert die Dichtungsfluid-Pumpvorrichtung das Fluid durch die Sperrkammer und über ein Druckbegrenzungsventil in das Fluidreservoir bzw. in eine mit dem Fluidreservoir verbundene Leitung, die sich von dem Fluidreservoir zum Pumpeneinlass erstrecken kann. Durch Bereitstellung eines solchen Druckbegrenzungsventils, das erst bei einem bestimmten, daran anliegenden Druck, öffnet, kann ein vorbestimmter, insbesondere ein durch Verstellen des Druckbegrenzungsventils einstellbarer Fluiddruck in der Sperrkammer aufrechterhalten werden, wenn die Dichtungsfluid-Pumpvorrichtung das Dichtungsfluid fördert bzw. einen Druck im Dichtungsfluid aufbaut. Die Auslöseschwelle des Druckbegrenzungsventils ist dabei typischerweise niedriger als die Auslöseschwelle eines in die Pumpeinheit integrierten Druckregelventils.

Grundsätzlich ist zu verstehen, dass aufgrund der Betätigung der Dichtungsfluid-Pumpvorrichtung durch die Rotation der Pumpenwelle der Drehkolbenpumpe der Betriebszustand der Dichtungsfluid-Pumpvorrichtung an den Betriebszustand der Drehkolbenpumpe angepasst ist und hierdurch die Förderrate bzw. der in der Sperrkammer erzeugte Druck, der durch die Dichtungsfluid-Pumpvorrichtung erzeugt wird, auch abhängig von der Förderrate bzw. dem in der Pumpkammer herrschenden Druck ist, die/der von der Drehkolbenpumpe erzeugt wird. Hiervon unabhängig ist es aber vorteilhaft, wenn durch die bevorzugte Ausführungsform eine Einstellmöglichkeit hinsichtlich des Sperrkammerdrucks und/oder des Fördervolumens der Dichtungsfluid-Pumpvorrichtung bereitgestellt wird. Diese Einstellmöglichkeit kann beispielsweise die Druckdifferenz, die durch die Dichtungsfluid-Pumpvorrichtung erzeugt wird, beeinflussen, ebenso kann durch die Einstellung ein Maximaldruck bzw. eine Maximaldruckdifferenz bestimmt werden. Des Weiteren kann durch die Einstellbarkeit ein Proportionalitätsfaktor zwischen dem durch die Dichtungsfluid-Pumpvorrichtung erzeugten Druck in der Sperrkammer und dem durch die Drehkolbenpumpe erzeugten Druck in der Pumpkammer oder zwischen dem durch die Dichtungsfluid-Pumpvorrichtung erzeugten Fördervolumen und dem durch die Drehkolbenpumpe erzeugten Fördervolumen definiert werden. Insbesondere ist es bevorzugt, den Druck in der Sperrkammer so einzustellen, dass er in keinem Betriebszustand der Drehkolbenpumpe unter die Hälfte aus der Summe des Ausgangsdrucks und des Eingangsdrucks der Pumpkammer fällt. Hierdurch wird gewährleistet, dass der Sperrkammerdruck stets über dem gemittelten Druck in der Pumpkammer liegt. Für einen besonders leckagesicheren Betrieb ist es vorteilhaft, den Druck in der Sperrkammer höher als den Druck am Einlass oder am Auslass der Pumpkammer einzustellen, je nachdem, welcher dieser beiden Drücke höher liegt.

Gemäß einer weiteren bevorzugten Ausführungsform ist vorgesehen, die Dichtungsanordnung fortzubilden durch eine zweite Sperrkammer, die die Pumpkammer an einer anderen, beabstandeten Stelle gegen Austritt von Pumpförderfluid abdichtet, wobei der Pumpeneinlass der Dichtungsfluid-Pumpvorrichtung mit einem Fluidreservoir verbunden ist, die Sperrkammer mit der zweiten Sperrkammer verbunden ist und die Sperrkammer oder die zweite Sperrkammer über ein Rückschlagventil mit dem Reservoir verbunden ist.

Gemäß dieser Ausführungsform wird eine Abdichtung einer Drehkolbenpumpe mittels zweier Sperrkammern durch eine einzige Dichtungsanordnung realisiert. Die zwei Sperrkammern können die Drehkolbenpumpe dabei an zwei gegenüberliegenden Enden einer Pumpenwelle, also beidseits einer Pumpkammer der Drehkolbenpumpe, abdichten. Diese Anordnung ist beispielsweise dann vorteilhaft, wenn auch beidseits der Pumpkammer, also an beiden Stellen, an denen das Pumpkammergehäuse von der Pumpenwelle durchdrungen wird, eine zuverlässige Abdichtung erzielt werden soll, um dort angeordnete Bauteile vor dem Zutritt von Pumpförderfluid und insbesondere darin enthaltenen Partikeln zu schützen. Dabei ist die Sperrkammer mit der zweiten Sperrkammer verbunden, was als eine Fluidverbindung zwischen Sperrkammer und zweiter Sperrkammer zu verstehen ist. Diese Fluidverbindung kann solcherart ausgeführt sein, dass die Sperrkammer und die zweite Sperrkammer in serieller Weise miteinander verbunden sind, sodass Fluid, welches die zweite Sperrkammer erreichen soll, zuvor die Sperrkammer durchflossen hat. Alternativ kann die Verbindung auch als parallele Verbindung von Sperrkammer und zweiter Sperrkammer ausgeführt sein, bei einer solchen parallelen Verbindung ist sowohl die Sperrkammer als auch die zweite Sperrkammer direkt mit der Dichtungsfluid-Pumpvorrichtung verbunden, sodass Fluid aus der Dichtungsfluid-Pumpvorrichtung direkt zur Sperrkammer und auch direkt zur zweiten Sperrkammer gefördert werden kann. Weiterhin ist zu verstehen, dass der gegebenenfalls vorgesehene Rückfluss aus der Sperrkammer und der zweiten Sperrkammer zu der Dichtungsfluid-Pumpvorrichtung oder einem mit dieser Dichtungsfluid-Pumpvorrichtung verbundenen Reservoir in serieller oder in paralleler Anordnung erfolgen kann.

Gemäß einer weiteren bevorzugten Ausführungsform wird die erfindungsgemäße Dichtungsanordnung fortgebildet durch eine Steuerungseinheit zur Steuerung des Drucks in der Sperrkammer. Grundsätzlich kann, wie zuvor erläutert der Druck in der Sperrkammer zum einen in Abhängigkeit von der Drehzahl der Pumpenwelle der Drehkolben gesteuert werden und insbesondere mit steigender Drehzahl ansteigen, um hierdurch auch einem gestiegenem Druck in der Pumpkammer der Drehkolbenpumpe einen entsprechenden gestiegenden Gegendruck in der Sperrkammer bzw. den Sperrkammern entgegen zu setzen und die Dichtungswirkung aufrechtzuerhalten. Die Steuerungseinheit kann in diesem Fall in der Dichtungsfluidpumpvorrichtung verwirklicht bzw. integriert sein, indem dort eine Drehzahlabhängige Förderrate und ein entsprechend Drehzahlabhängiger Druckaufbau erfolgt. Die Steuerungseinheit kann auch durch hiervon unabhängige oder zusätzliche Steuerungselemente oder Einrichtungen verwirklicht sein. Beispielsweise kann die Steuerung auch mittels einer Steuerungseinheit in Form eines Überdruckventils, welches den Druck in der Sperrkammer einstellbar macht, realisiert werden. Insbesondere kann die Steuerungseinheit auch solcherart ausgeführt sein, dass sie einen Druck in der Pumpkammer der Drehkolbenpumpe erfasst und in Abhängigkeit dieses Drucks den Druck in der Sperrkammer einstellt.

Die Ausführungsform kann weiter fortgebildet werden, indem die Steuerungseinheit ausgebildet ist, um einen Druck in der Sperrkammer bzw. den Sperrkammern einzusteuern, der höher ist als ein in der Pumpkammer herrschende Druck. Als ein in der Pumpkammer herrschender Druck ist hierbei beispielsweise der aktuell herrschende Druck in der Pumpkammer zu verstehen, also der jeweils aktuelle Druck, der sich während des oftmals pulsierenden Druckverlaufs innerhalb der Pumpkammer ausbildet. Als ein in der Pumpkammer herrschender Druck kann aber ebenso ein mittlerer Druck verstanden werden, der sich beispielsweise über die Zeit gemittelt ergibt. Der Druck in der Pumpkammer der Drehkolbenpumpe wiederum kann als die Hälfte der Summe aus dem Druck in der Pumpenkammerauslassöffnung und der Pumpenkammereinlassöffnung verstanden werden, wobei auf Grund des Arbeitsprinzips der Drehkolbenpumpe als volumenfördernde Pumpe das Verhältnis dieser beiden Drücke je nach Betriebszustand und äußeren Bedingungen sehr unterschiedlich sein kann. Durch Einstellung eines Drucks in der Sperrkammer, der höher ist als ein solcher in der Pumpkammer herrschender Druck kann eine unerwünschte Leckage von Flüssigkeit aus der Pumpkammer in die Sperrkammer und durch die Sperrkammer hindurch zuverlässig verhindert werden. Insbesondere kann als ein in der Pumpkammer herrschender Druck dabei auch ein maximaler Druck in der Pumpkammer verstanden werden, also ein Spitzendruck, der gegebenenfalls nur kurzfristig auftritt, jedoch dann eine entsprechende Leckage verursachen könnte.

Noch weiter kann die Fortbildung mit einer Steuerungseinheit zur Steuerung des Drucks in der Sperrkammer fortgebildet werden, indem die Steuerungseinheit ausgebildet ist, um in vorbestimmten Zeitabständen oder bei vorbestimmten Betriebszuständen den Druck in der Sperrkammer für eine vorbestimmte Zeitdauer zu erhöhen, insbesondere über einen in der Pumpkammer herrschenden Druck zu erhöhen. Durch die Erhöhung des Drucks in dieser Form wird erreicht, dass Dichtungsfluid aus der Sperrkammer in Richtung der Pumpkammer der Drehkolbenpumpe fließt und hierdurch die Wellendichtungen von etwaig eingedrungenem Fluid aus der Pumpkammer reinigt und solches Fluid, auch wenn es bereits in die Sperrkammer eingedrungen ist, zurück in die Pumpkammer befördert. Diese Druckerhöhung kann in regelmäßigen Zeitintervallen erfolgen und muss häufig lediglich über eine Dauer von wenigen Sekunden durchgeführt werden, um den gewünschten Effekt zu erreichen. Die Erhöhung des Drucks kann auch beispielsweise regelmäßig bei dem Einschaltvorgang der Pumpe oder dem Ausschaltvorgang der Pumpe durchgeführt werden oder von anderen steuerungstechnischen Ereignissen abhängig gemacht werden. Die regelmäßige Druckerhöhung ist insbesondere dann vorzuziehen, wenn in der Pumpkammer sehr variable Druckverhältnisse herrschen, beispielsweise durch entsprechend variable äußere Druckbedingungen an Pumpeneinlass oder Pumpenauslassöffnungen und eine zuverlässige Steuerung und Anpassung des Drucks in der Sperrkammer an diese variablen Druckverhältnisse in der Pumpkammer nicht zuverlässig möglich ist. In diesem Fall kann in Kauf genommen werden, dass geringe Mengen an gefördertem Fluid in Richtung der Sperrkammer vordringen, diese werden durch die regelmäßige Druckerhöhung in der Sperrkammer dann zurück gedrängt.

Gemäß einer weiteren Fortbildung ist vorgesehen, dass ein Leckagesensor zur Erfassung einer Leckage aus der Sperrkammer bzw. den Sperrkammern bereitgestellt ist und dass die Steuerungseinheit mit dem Leckagesensor signaltechnisch gekoppelt und ausgebildet ist, um in Abhängigkeit des Sensorsignals des Leckagesensors den Druck in der Sperrkammer bzw. den Sperrkammern einzusteuern, insbesondere indem bei einer Leckage unterhalb eines vorbestimmten unteren Leckagegrenzwertes den Druck in der Sperrkammer/den Sperrkammern zu erhöhen, und/oder bei einer Leckage oberhalb eines vorbestimmten oberen Leckagegrenzwertes den Druck in der Sperrkammer/den Sperrkammern zu verringern. Grundsätzlich ist eine permanente geringfügige Leckage aus der Sperrkammer ein Anhaltspunkt dafür, dass die gewünschte Dichtungswirkung der Sperrkammer erreicht und aufrecht erhalten wird. Gemäß der Ausführungsform ist daher vorgesehen, diese Leckage zu überwachen, wozu ein Leckagesensor, der als separates Bauelement oder integriert in die Dichtungsfluidpumpvorrichtung ausgeführt sein kann, vorgesehen ist, der diese Leckage erfasst und folglich eine Steuerung in der Weise erlaubt, dass in Abhängigkeit dieser Leckage der Druck in der Sperrkammer eingesteuert wird. Prinzipiell erfolgt dies in der Weise, dass bei steigender Leckage der Druck herabgesetzt und bei sinkender Leckage der Druck heraufgesetzt wird, dabei kann vor allen Dingen der Druck solcherart eingeregelt werden, dass die Leckage in einem vorbestimmten Intervall liegt, also oberhalb eines unteren Limits und unterhalb eines oberen Limits. Die Steuerungseinheit kann hierbei ebenfalls in die Dichtungsfluidpumpvorrichtung integriert sein, beispielsweise indem diese so ausgeführt ist, dass eine zwangsweise Volumenförderung in die Sperrkammer erfolgt, die einen entsprechenden Volumenabfluss aus der Sperrkammer in Form einer Leckage erzwingt.

Gemäß einer weiteren bevorzugten Ausführungsform ist vorgesehen, dass die erste Wellendichtung eine Gleitringdichtung ist, insbesondere eine Gleitringdichtung, die ausgebildet ist, um einen hydrodynamisch gebildeten Schmierfilm aufzubauen. Eine Gleitringdichtung eignet sich insbesondere an dieser Dichtungsstelle gut, um eine zuverlässige Abdichtung auch dann zu erzielen, wenn ein gelegentliches oder vorrübergehendes Eindringen von Feststoffen oder Partikeln in den Dichtungsbereich auftreten kann, da solche Feststoffe und Partikel aus der Gleitringdichtung wieder herausgespült bzw. zurückgedrängt werden können, wohingegen bei einer Radialwellendichtung mit der dieser konstruktionsprinzipiell eigenen Dichtungslippe ein solcher Partikel eine Beschädigung der Dichtkante und damit eine irreversible Undichtigkeit der Dichtung herbeiführen kann. Insbesondere kann die Gleitringdichtung dabei einen hydrodynamisch gebildeten Schmierfilm aufbauen, also einen durch die Relativbewegung zwischen der Pumpenwelle und einer Dichtungsoberfläche erzeugten Druckaufbau innerhalb der Gleitringdichtung, der zu einer zuverlässigen Trennung zwischen Pumpenwelle oder einem mit der Pumpenwelle verbundenen rotierenden Bauteil und einer feststehenden Dichtungsoberfläche führt, zwischen welcher sich der hydrodynamisch aufgebaute Schmierfilm befindet.

Gemäß einer weiteren bevorzugten Ausführungsform wird die Dichtungsanordnung fortgebildet durch eine zweite Wellendichtung, welche die Pumpenwelle umschließt und die Sperrkammer an einer der ersten Wellendichtung gegenüberliegenden Seite abdichtet. Diese zweie Wellendichtung umschließt, ebenso wie die erste Wellendichtung, die Pumpenwelle und liegt folglich koaxial zu der ersten Wellendichtung. Die Sperrkammer ist zwischen der ersten und der zweiten Wellendichtung angeordnet, sodass beispielsweise durch Sperrkammer eine Abdichtung einer Pumpkammer der Drehkolbenpumpe gegenüber einem Getrieberaum der Drehkolbenpumpe erzielt werden kann, indem die erste Dichtungsanordnung die Sperrkammer gegenüber der Pumpkammer abdichtet und die zweite Dichtungsanordnung die Sperrkammer gegenüber dem Getrieberaum abdichtet. Die Pumpenwelle durchdringt hierbei die Sperrkammer und folglich auch die beiden Wellendichtungen.

Die zweite Wellendichtung kann hierbei bevorzugt ein Radialwellendichtring sein, also ein Dichtungselement, welches sich durch eine umlaufende Spiralfeder gespannte Dichtungslippe, die auf der Pumpenwelle oder einer mit der Pumpenwelle mit rotierenden Schale oder der gleichen dichtend anliegt, wobei der Radialwellendichtring einen im Wesentlichen U-förmigen Querschnitt aufweist, an dessen einem Schenkelende die Dichtlippe angeordnet ist und dessen Schenkel in Richtung desjenigen Raumes der beiden gegeneinander abzudichtendem Räume weist, der einen höheren Druck aufweist, um hierdurch ein Anpressen der Dichtungslippe an das rotierende Bauteil bei Erhöhung dieses Drucks zu erreichen.

Ein weiterer Aspekt der Erfindung ist eine Drehkolbenpumpe, umfassend eine Pumpkammer mit einer Pumpkammereinlassöffnung und einer Pumpkammerauslassöffnung, zwei auf entsprechend zwei parallel zueinander verlaufenden Pumpenwellen befestigte und miteinander kämmende Drehkolben, die bei einander entgegengesetzter Rotation ein Pumpförderfluid von der Pumpkammereinlassöffnung zu der Pumpkammerauslassöffnung fördern, einen Antriebsmechanismus, der mit zumindest einer der zwei Pumpenwellen gekoppelt ist zum Antreiben der Drehkolben, welche eine Dichtungsanordnung mit einer Sperrkammer der zuvor beschriebenen Art aufweist, wobei die Sperrkammer für eine Abdichtung der Pumpkammer angeordnet ist.

Mit dieser Ausgestaltung einer Drehkolbenpumpe wird in erfindungsgemäßer Weise die vorteilhafte Abdichtung der zuvor beschriebenen Dichtungsanordnung dazu genutzt, um das Austreten von Pumpförderfluid oder von Partikeln aus der Pumpkammer, beispielsweise in einen Antriebsmechanismus oder eine Lagerung oder ein Synchrongetriebe der Drehkolbenpumpe zu verhindern.

Dabei ist es besonders bevorzugt, wenn der Antriebsmechanismus ein in einem Getrieberaum angeordnetes Synchronisierungsgetriebe zur Synchronisierung der Rotation der zwei Pumpenwellen aufweist und die Dichtungsanordnung den Getrieberaum gegenüber der Pumpkammer abdichtet. Mit dieser Ausführungsform der erfindungsgemäßen Drehkolbenpumpe wird ein vorteilhafter Aufbau der Drehkolbenpumpe mit einem benachbart zum Pumpenraum angeordneten Synchronisierungsgetriebe verwirklicht und eine zuverlässige Abdichtung zwischen Pumpkammer und Synchronisierungsgetriebe realisiert.

Es ist weiter bevorzugt, dass die Sperrkammer gegen den Durchtritt von Pumpförderfluid entlang der zwei Pumpenwellen abdichtet. Gemäß dieser Ausführungsform wird durch die Sperrkammer eine Abdichtung entlang beider Pumpenwellen der Drehkolbenpumpe realisiert, das heißt, durch die Sperrkammer wird sowohl der Durchtritt von Pumpförderfluid zum Antriebsmechanismus entlang der einen Welle als auch entlang der zweiten Welle verhindert. Die Sperrkammer ist hierbei als eine beide Durchtrittsstellen der zwei Pumpenwellen umschließende Sperrkammer ausgebildet, wobei dies so zu verstehen ist, dass diese Sperrkammer auch durch zwei Sperrkammerabschnitte, die miteinander in Verbindung stehen, gebildet werden kann.

Schließlich ist es noch weiter bevorzugt, die erfindungsgemäße Drehkolbenpumpe mit einer zweiten Sperrkammer, wie zuvor in Bezug auf die Dichtungsanordnung beschrieben, auszurüsten und hierbei vorzusehen, dass die zweite Sperrkammer gegen den Durchtritt von Pumpförderfluid entlang der zwei Pumpenwellen gegenüberliegend zu der Sperrkammer abdichtet. Durch diese Ausführungsform wird durch die Sperrkammer und die zweite Sperrkammer eine zuverlässige Abdichtung der Pumpkammer entlang der Pumpenwellen auf beiden Seiten der Pumpkammer erzielt. Wiederum ist zu verstehen, dass auch die zweite Sperrkammer hierbei durch zwei Sperrkammerabschnitte gebildet werden kann, die miteinander in Fluidverbindung sind, um hierdurch die Abdichtung der beiden Durchtrittsstellen der Pumpenwellen zu erzielen.

Es ist weiterhin bevorzugt, wenn die zweite Sperrkammer zwischen der Pumpkammer der Drehkolbenpumpe und einer Lagerungseinheit für die Pumpenwellen der Drehkolbenpumpe angeordnet ist und diese Lagerungseinheit gegen die Pumpkammer abdichtet, wobei in der Sperrkammer ein Dichtungs-Schmierfluid angeordnet ist, welches durch die Dichtungsfluid-Pumpvorrichtung gefördert wird, und dass der Pumpenauslass der Dichtungsfluid-Pumpvorrichtung mit der Lagerungseinheit in Fluidverbindung steht zur Förderung von Dichtungs-Schmierfluid zu der Lagerungseinheit. Die erste und zweite Sperrkammer sind beidseits der Pumpkammer der Drehkolbenpumpe angeordnet, sodass diese Pumpkammer zwischen den beiden Sperrkammern liegt und folglich auch zwischen einer Lagerung der Pumpenwellen auf der einen Seite jenseits der ersten Sperrkammer und auf der anderen Seite, jenseits der zweiten Sperrkammer. Eine Lagerung der Pumpenwellen jenseits der zweiten Sperrkammer kann zwar grundsätzlich in vielen Anwendungsfällen mit einer Lebensdauerfüllung eines Schmiermediums versehen werden, für andere Anwendungen ist es jedoch vorteilhaft, einen Kreislauf eines Schmiermediums vorzusehen oder ein Schmiermedium diesen Lagerungen durch eine entsprechende Fördereinrichtung zuzuführen. Hierfür kann insbesondere gemäß dieser Ausführungsform die Dichtungsfluidpumpvorrichtung eingesetzt werden, die in diesem Fall ein Dichtungsfluid, das sich auch als Schmiermedium eignet, also ein Dichtungs-Schmierfluid fördert und dieses aus der ersten Sperrkammer in die zweite Sperrkammer und von dort aus zu der Lagerungseinheit fördern kann oder durch eine Bypassleitung direkt diese Lagerungseinheit mit dem Dichtungs-Schmierfluid beaufschlagen kann.

Ein weiterer Aspekt der Erfindung ist eine Dichtungspatrone, die für eine Dichtungsanordnung bzw. eine Drehkolbenpumpe der zuvor beschrieben Art ausgebildet ist und eine erste Wellendichtung mit einer inneren Umfangsfläche, die eine Durchlassöffnung für eine Pumpenwelle umgibt und ausgebildet ist zur relativ-bewegten abgedichteten Anordnung um die Pumpenwelle und eine zweite Wellendichtung mit einer inneren Umfangsfläche, die eine Durchlassöffnung für die Pumpenwelle umgibt und ausgebildet ist zur relativ-bewegten abgedichteten Anordnung um die Pumpenwelle und ein Betätigungselement, das zwischen der ersten und der zweiten Wellendichtung angeordnet ist, drehmomentfest mit der Pumpenwelle koppelbar ist und eine Betätigungsfläche für eine Dichtungsfluid-Pumpvorrichtung aufweist, umfasst. Insbesondere bei Drehkolbenpupen, die zur Förderung abrasiver und aggressiver Medien eingesetzt werden, ist es wünschenswert, die Dichtungselemente der Drehkolbenpumpe im Zuge regelmäßiger Wartungsvorgänge ersetzten zu können und diesen Wartungsvorgang in schneller Weise ausführen zu können. Zu diesem Zweck ist es erfindungsgemäß vorgesehen, die für einen solchen Austausch relevanten Bauteile, also die dem Verschleiß besonders ausgesetzten Bauteile in einer Dichtungspatrone zusammen zu fassen, die als ein zusammengehöriges, integriertes Bauelement ausgetauscht und in die Drehkolbenpumpe eingebaut werden kann, um auf diese Weise die erfindungsgemäße Dichtungsanordnung herzustellen. Die Dichtungspatrone umfasst dabei eine erste und eine zweite Dichtungsanordnung, die dazu dienen, die Pumpenwellen oder mit den Pumpenelementen verbundene, rotierende Bauelemente wie eine Hülse oder dergleichen abzudichten. Weiterhin umfasst die Dichtungspatrone ein Betätigungselement, das zwischen diesen beiden Wellendichtungen angeordnet ist und ausgebildet ist, um Drehungen fest mit einer Pumpenwelle verbunden zu werden. Dieses Betätigungselement kann beispielsweise als Nocken, als Exzenter, als Kurvenscheibe, Mehrfachnocken oder dergleichen ausgeführt sein, um bei Rotation der Pumpenwelle mit zu rotieren und eine in Bezug auf diese Rotation winkelortsfeste Dichtungsfluid-Pumpvorrichtung anzutreiben. Gemäß einer bevorzugten Ausführungsform kann diese Dichtungsfluidpumpvorrichtung, die beispielsweise so ausgebildet ist wie zuvor erläutert ebenfalls Bestandteilt der Dichtungspatrone sein, also auch ausgetauscht werden, wenn im Zuge der Wartung die Dichtungspatrone einer Drehkolbenpumpe getauscht wird. Grundsätzlich ist zu verstehen, dass die Dichtungspatrone bevorzugt ein in sich abgeschlossenes Konstruktionsbauteil darstellt, welches beispielsweise mit einer entsprechenden Umfangsfläche oder axialen Stirnfläche innerhalb der Drehkolbenpumpe befestigt und abgedichtet wird. Diese Dichtungspatrone bewirkt dann die Abdichtung zwischen der Pumpkammer und einem dieser Pumpkammer gegenüber abzudichtenden Raum der Drehkolbenpumpe, beispielsweise ein Getrieberaum oder einem Lagerungsbereich. Grundsätzlich ist beispielsweise dann, wenn die Pumpkammer der Drehkolbenpumpe an zwei axial gegenüberliegenden Seiten abgedichtet werden soll, der Einsatz von zwei solchen Dichtungspatronen erforderlich, um zwei entsprechende Sperrkammerdichtungsanordnungen bereitzustellen.

Die Dichtungspatrone kann fortgebildet werden, in dem die erste Dichtungsanordnung als Gleitringdichtung und/oder dass die zweite Dichtungsanordnung als Radialwellendichtring ausgebildet ist. Gemäß dieser Ausführungsform sind die erste und zweite Wellendichtung entsprechend als Gleitringdichtung und als Radialwellendichtring ausgeführt, was gemäß der hierzu vorstehend erläuterten besonderen Funktionsweise und Widerstandsfähigkeit dieser beiden Dichtungstypen für den Anwendungsfall im Abwicklungsbereich gegenüber der Pumpkammer der Drehkolbenpumpe einerseits und gegenüber einem Lagerungsbereich oder einem Getrieberaum der Drehkolbenpumpe andererseits für eine effiziente und dauerhafte Dichtung am besten entspricht.

Eine bevorzugte Ausführungsform der Erfindung wird anhand der beiliegenden Figuren beschrieben. Es zeigen:
- Figur 1: Eine schematische Darstellung einer ersten Ausführungsform einer Dichtungsanordnung, die nicht der Erfindung entspricht.
- Figur 2: Eine schematische Darstellung einer zweiten Ausführungsform der Erfindung,
- Figur 3: Eine schematische Darstellung einer dritten Ausführungsform der Erfindung,
- Figur 4: Eine schematische Darstellung einer vierten Ausführungsform der Erfindung,
- Figur 5: Eine quergeschnittene Ansicht eines Exzenterelements mit Antriebsstift für eine Pumpeinheit gemäß der Erfindung,
- Figuren 6a-e: Einen Ablauf der Pumpfunktion der erfindungsgemäßen Pumpvorrichtung der Erfindung,
- Figur 7: eine perspektivische, teilgeschnittene Ansicht einer erfindungsgemäßen Dichtungspatrone, und
- Figur 8: eine längsgeschnittene Ansicht der Dichtungspatrone gemäß Fig. 7.

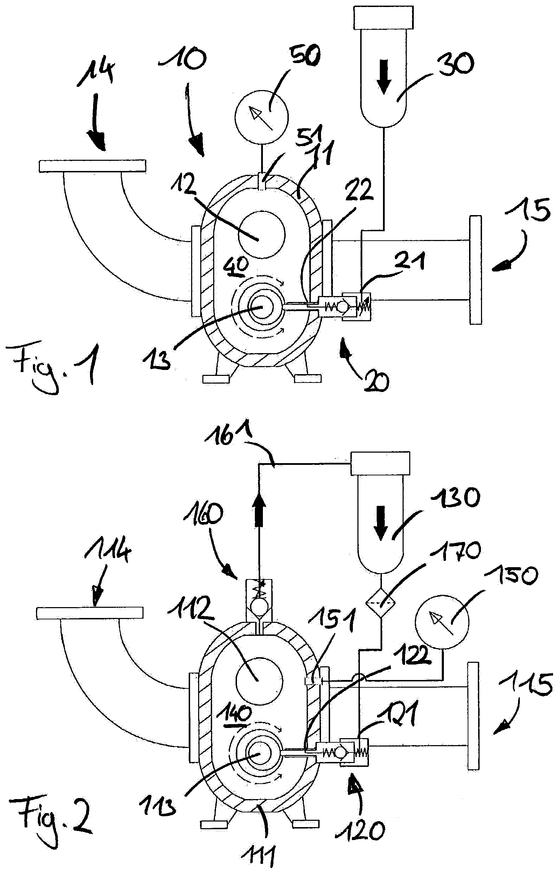

Bezugnehmend zunächst auf Figur 1 ist eine Drehkolbenpumpe 10 mit einem Pumpengehäuse 11, in dem sich zwei Pumpenwellen 12, 13 befinden, dargestellt. Auf den Pumpenwellen 12, 13 sind miteinander kämmende Drehkolben angeordnet, die nicht in der in Figur 1 dargestellten Schnittebene liegen. Das Pumpengehäuse verfügt über einen Einlass 14 und einen Auslass 15, wobei zu verstehen ist, dass durch Reversierung der Drehrichtung der Pumpenwellen Einlass und Auslass auch vertauscht werden können.

Die untere Pumpenwelle 13 treibt eine Pumpvorrichtung 20 an, die nachfolgend in größerem Detail erläutert wird. Die Pumpvorrichtung 20 weist einen Pumpeneinlass 21 auf, der mit einem Dichtungsfluidreservoir 30 verbunden ist.

Die Pumpvorrichtung 20 wird aus dem Reservoir 30 gespeist und fördert das Dichtungsfluid über einen Pumpenauslass 22 in eine Sperrkammer 40. Die Sperrkammer 40 erstreckt sich über den gesamten Querschnitt innerhalb des Pumpengehäuses 11 und ist beidseits mittels Dichtungen gegenüber anderen Querschnittsabschnitten abgedichtet. So kann typischerweise in einem vor der Bildebene liegendem Querschnitt ein Synchronisationsgetriebe oder eine Lagerung angeordnet sein, und in einem hinter der Bildebene liegenden Querschnitt kann der Pumpeninnenraum mit den Drehkolben angeordnet sein, sodass die in der Querschnittsansicht nach Figur 1 dargestellte Sperrkammer diese Pumpkammer von dem Synchronisationsgetriebe trennt und abdichtet. Am oberseitigen Ende des Pumpengehäuses 11 ist über einen Durchlass im Gehäuse reichenden Anschluss 51 eine Druckmesseinheit 50 angeschlossen, die eine Überwachung der Funktion der Sperrkammer ermöglicht, indem der darin herrschende Druck angezeigt wird. Dieser Anschluss 51 dient zugleich der Entlüftung der Sperrkammer, um eine vollständige Füllung mit Dichtungsfluid bei Inbetriebnahme oder nach Wartungsvorgängen sicher zu stellen.

Die Ausführungsform gemäß Figur 1 zeichnet sich durch eine druckbeaufschlagte, geschlossene Sperrkammer auf. Hierunter ist zu verstehen, dass die Sperrkammer 40 durch die Pumpvorrichtung 20 mit einem Dichtungsfluid in einem Überdruck beaufschlagt wird, hierbei aber nicht von diesem Dichtungsfluid mit einer in einem Kreislauf stattfindenden Zirkulation durchströmt wird. Grundsätzlich kann dies so ausgestaltet sein, dass kein Fluidfluss des Dichtungsfluids stattfindet, sondern lediglich durch die Pumpvorrichtung 20 ein Druck aufrecht erhalten wird oder dass ein geringer Fluss an Dichtungsfluid stattfindet, der die Leckageverluste an Dichtungsfluid über die Abdichtungen der Sperrkammer im Bereich der Pumpenwellen ausgleicht und auf diese Weise das Fluidvolumen und den Überdruck in der Sperrkammer 40 aufrecht erhält.

Figur 2 zeigt eine zweite Ausführungsform der Erfindung. Die zweite Ausführungsform ist hinsichtlich des Aufbaus der Drehkolbenpumpe mit Einlass 114, Auslass 115 und Pumpengehäuse 111 sowie zwei darin angeordneten Pumpenwellen 112, 113 übereinstimmend zur ersten Ausführungsform aufgebaut. Ebenfalls übereinstimmend zur ersten Ausführungsform ist eine Dichtungsfluid-Pumpvorrichtung 120 mit der unteren Pumpenwelle 113 gekoppelt und erzeugt in Abhängigkeit von der Rotation dieser Pumpenwelle 113 einen Druck- und Volumenstrom eines Dichtungsfluids. Das Dichtungsfluid wird wiederum über einen Pumpeneinlass 121 aus einem Dichtungsfluidreservoir 130 der Pumpvorrichtung 120 zu geführt und unter Überdruck über einen Pumpenauslass 122 in eine Sperrkammer 140 gefördert.

Im Unterschied zur ersten Ausführungsform gemäß Figur 1 ist bei der zweiten Ausführungsform gemäß Figur 2 am oberen Ende des Pumpengehäuses 111 ein Rückschlagventil 160 angeordnet, das mittels eines Durchgangs mit der Sperrkammer 140 verbunden ist. Das federbelastete Rückschlagventil 160 ist unter dem einstellbarem Federdruck bis zu einem bestimmten und damit auch einstellbarem Überdruck in der Sperrkammer 140 geschlossen, bei Überschreitung dieses Überdrucks in der Sperrkammer 140 wird das Rückschlagventil 160 jedoch in die Offenstellung gedrückt und lässt hierdurch Dichtungsfluid aus der Sperrkammer 140 entweichen. Das entweichende Dichtungsfluid wird über eine Rückführleitung 161 in das Dichtungsfluidreservoir 130 zugeführt, wobei zu verstehen ist, dass sowohl das Dichtungsfluidreservoir 130 als auch das Dichtungsfluid in der Rückführleitung 161 durch die Drosselung in dem Rückschlagventil 160 praktisch unter Umgebungsdruck steht.

Die Einstellung des Rückschlagventils 160, also die Einstellung von dessen Druckauslöseschwelle, erfolgt durch Justieren der Federvorspannung. Für eine genaue Einstellung und eine Überwachung der Funktion der Sperrkammer ist auch hier eine Druckmesseinheit 150 über eine Durchgangsbohrung 151 in dem Pumpengehäuse 111 mit der Sperrkammer 140 verbunden. Zwischen dem Dichtungsfluidreservoir 130 und dem Pumpeneinlass 121 ist ein Ölfilter 170 eingesetzt sein.

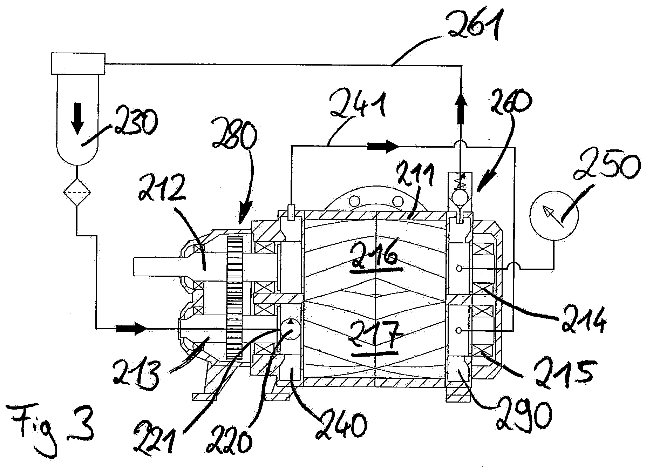

Figur 3 zeigt einen Längsschnitt durch eine dritte Ausführungsform der Erfindung. Wiederum ist, wie bei den vorherigen Ausführungsformen, eine Drehkolbenpumpe aufgebaut aus einen Pumpengehäuse 211, in dem Drehkolben 216, 217 auf Pumpenwellen 212, 213 angeordnet sind. Ein Synchronisationsgetriebe 280 sorgt mittels zweier Zahnräder für einen synchronen Lauf der beiden Pumpenwellen 212, 213. Zwischen dem Synchronisationsgetriebe 280 und der Pumpkammer in dem Pumpengehäuse 211 und mit den darin angeordneten Drehkolben ist eine erste Sperrkammerdichtung 240 angeordnet. Die Pumpenwellen sind an einem dem Synchronisationsgetriebe 280 gegenüberliegendem Ende in Wälzlagern 214, 215 gelagert. Die zweite Sperrkammer 290 ist zwischen der Pumpkammer, in der die Drehkolben 216, 217 angeordnet sind, und den Wälzlagern 214, 215 angeordnet dichtet hierdurch einen Durchtritt von Fluid aus der Pumpkammer zu den Wälzlagern 214 und 215 ab.

Die dritte Ausführungsform weist in Übereinstimmung mit der ersten und zweiten Ausführungsform eine Pumpvorrichtung 220 auf, die mit der unteren Pumpenwelle 213 zusammenwirkt. Die Pumpvorrichtung 220 wird über einen Pumpeneinlass 221 aus einen Pumpenreservoir 230 gespeist und baut einen Überdruck in der ersten Sperrkammer 240 auf. Die erste Sperrkammer 240 ist mittels einer Sperrkammerverbindungsleitung 241 mit der zweiten Sperrkammer 290 verbunden. Diese Verbindung ist praktisch drosselfrei, sodass der Überdruck des Dichtungsfluids in der ersten Sperrkammer 240 und der Überdruck des Dichtungsfluids in der zweiten Sperrkammer 290 übereinstimmend ist. Die zweite Sperrkammer 290 ist mittels eines Rückschlagventils 260 mit einer Rückführleitung 261 verbunden. Sowohl die erste Sperrkammer 240 als auch die zweite Sperrkammer 290 können hierdurch in Reihe von dem aus dem Pumpenauslass der Pumpvorrichtung geförderten Dichtungsfluid durchströmt werden, wobei das Rückschlagventil 260 eine Druckbegrenzung und Abfuhr von Dichtungsfluid über die Rückführleitung 261 in das Dichtungsfluidreservoir 230 bewirkt. Eine Druckmesseinheit 250 ist mit der zweiten Sperrkammer 290 gekoppelt und ermöglicht eine Einstellung des Überdrucks in den beiden Sperrkammern sowie einer Funktionskontrolle.

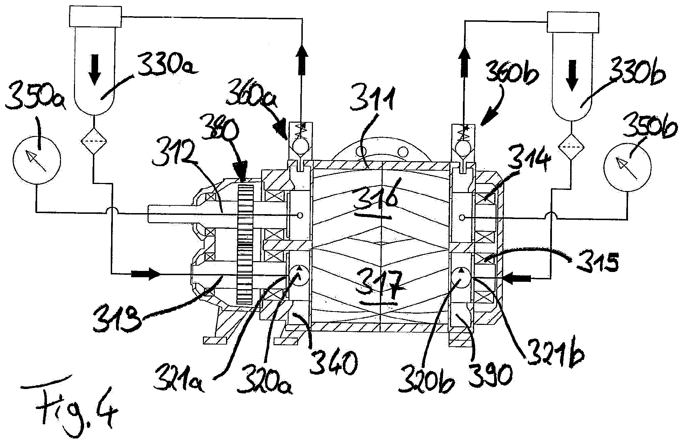

Fig. 4 zeigt eine vierte Ausführungsform der Erfindung. Wiederum sind zwei Sperrkammern 340, 390 an einer Drehkolbenpumpe mit einem Pumpengehäuse 311 angeordnet und dichten eine von Drehkolben 316, 317 gefüllte Pumpkammer gegenüber einem Synchronisationsgetriebe 380 und einer Lagerungsanordnung entlang von Pumpenwellen 312 und 313 ab.

Während bei der dritten Ausführungsform beide Sperrkammern 240, 290 aus einer einzigen Pumpvorrichtung 220 mit Druck beaufschlagt werden und entsprechend in Reihe geschaltet sind, ist dies bei der vierten Ausführungsform anders realisiert. Die vierte Ausführungsform weist eine erste Pumpvorrichtung 320a auf, die mit der unteren Pumpenwelle 313 zusammenwirkt und die erste Sperrkammer 340 mit Druck beaufschlagt. Die erste Sperrkammer 340 ist über ein Rückschlagventil 360a mit einem ersten Dichtungsfluidreservoir 330a verbunden und wird aus diesem über den Pumpeneinlass 321a der ersten Pumpvorrichtung 320a mit Druck beaufschlagt. Eine erste Druckmesseinheit 350a ist mit der ersten Sperrkammer 340 verbunden und ermöglicht eine Druckeinstellung und Funktionskontrolle der ersten Sperrkammer 340.

Die zweite Sperrkammer 390 dichtet wiederum zwei Wälzlager 314, 315 gegen die Pumpkammer ab und wird über eine zweite Pumpvorrichtung 320b mit Druck beaufschlagt, die ebenfalls mit der unteren Pumpenwelle 313 zusammenwirkt. Die erste und zweite Pumpvorrichtung 320a, b sind voneinander beabstandet und unabhängig und funktionell unabhängig. Sie sind jeweils solcherart angeordnet, dass aus dem Pumpenauslass der jeweiligen Pumpvorrichtung die von ihr mit Druck beaufschlagte Sperrkammer 340, bzw. 390 direkt gespeist wird. Ein zweites Rückschlagventil 360b führt überschüssiges Dichtungsfluid aus der zweiten Sperrkammer 390 in ein zweites Dichtungsfluidreservoir 330b ab, aus dem die zweite Pumpvorrichtung 320b über deren entsprechenden Pumpeneinlass 321b gespeist wird. Auch die zweite Sperrkammer 390 ist mit einer separaten Druckmesseinheit 350b gekoppelt, die eine Einstellung und Kontrolle des Drucks in der Sperrkammer 390 ermöglicht.

Die zweite Ausführungsform weist daher zwei voneinander unabhängige Sperrkammern auf, die zum einen eine unabhängige und damit unterschiedliche Druckeinstellung in der ersten und der zweiten Sperrkammer ermöglichen, was in bestimmten Anwendungsfällen vorteilhaft ist.

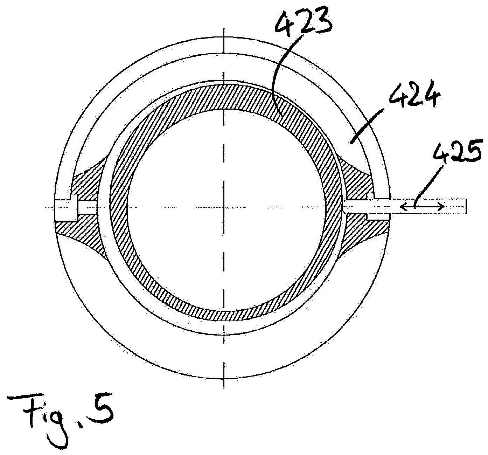

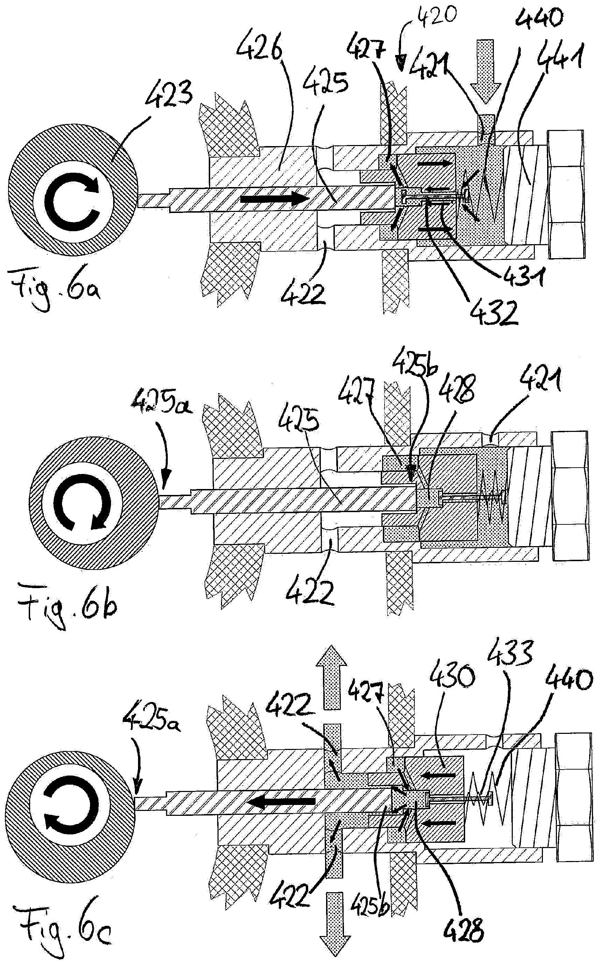

Anhand der Figuren 5 und 6a-c wird die Funktion der Pumpvorrichtung im Detail erläutert.

Fig. 5 zeigt einen Querschnitt durch ein Exzenterelement 423, das drehmomentfest mit einer Pumpenwelle, die durch den Innenraum des Exzenterelements 423 hindurch ragt, gekoppelt werden kann. Das Exzenterelement 423 ist umgeben von einem Gehäuse 424, in dem eine radiale Bohrung die Führung eines Pumpenstifts 425 ermöglicht. Der Pumpenstift liegt an der Außenumfangsfläche des Exzenterelements 423 an und wird durch den Exzenter in radialer Richtung zyklisch hin und her bewegt.

Der Pumpenstift 425 ist Teil einer Pumpeinheit 420 und axial beweglich in einem Pumpeinheitsgehäuse 426 geführt. Der Pumpenstift 425 liegt mit seinem linksseitigen Ende 425a an der Umfangsfläche des Exzenters 423 an und steht mit seinem demgegenüber liegenden rechtsseitigen Ende 425b in Kontakt mit einem Kolbenelement 430. Das Kolbenelement 430 ist mittels einer Druckfeder 440 in Richtung des Pumpenstiftes vorgespannt und liegt daher in der in Fig. 6a gezeigten Saugphase an dem rechtsseitigen Ende 425b des Pumpenstifts 425 an. In dieser Saugphase wird der Pumpenstift 425 durch den Exzenter 423 nach radial auswärts in das Pumpengehäuse 426 hinein bewegt und drückt den Pumpenkolben 430 daher gegen die Vorspannung der Feder 440 in das Pumpengehäuse hinein. Durch diese Bewegung wird Dichtungsfluid durch einen axialen Kanal 431 aus der Einlassöffnung 421 in eine ringförmige Zwischenkammer 427 gesaugt, deren Volumen sich durch die Bewegung von Pumpenstift 425 und Pumpenkolben 430 vergrößert. Der axiale Kanal 431 im Pumpenkolben 430 ist mittels eines Ventilkörpers 432, der federbeaufschlagt ist, wechselweise in Abhängigkeit der Druckverhältnisse am Pumpenkolben 430 verschlossen oder geöffnet. Unter Einwirkung eines Unterdrucks in der Zwischenkammer 427 wird der Ventilkörper in die Offen-Stellung gegen die Federvorspannung der Feder 433 gezogen und ermöglicht daher den Durchtritt von Dichtungsfluid durch den axialen Kanal 431 in einen innenliegenden zentralen Kanalabschnitt 428 zwischen Pumpenstift 425 und Kolbenelement 430 in der Saugphase.

Fig. 6b zeigt die Anordnung der Pumpeinheit im radial äußeren Totpunkt. Die Zwischenkammer 427 ist in dieser Position maximal gefüllt, der axiale Kanal 431 durch den Ventilkörper 432 aufgrund des nicht mehr vorliegenden Unterdrucks in der Zwischenkammer geschlossen. Das Kolbenelement 430 wird durch den Pumpenstift 425 in der radial äußersten Position gegen den Druck der Feder 440 gehalten.

Figur 6c zeigt die Pumpeneinheit in der Druckphase. In dieser Druckphase wird der Pumpenstift nach radial einwärts bewegt und gibt dadurch den Pumpenkolben für eine radial einwärts gerichtete Bewegung frei. Der Pumpenkolben 430 wird durch die Federvorspannung der Feder 440 radial einwärts gedrückt und baut hierdurch Druck in der Zwischenkammer 427 auf. Durch diesen Überdruck wird der Pumpenstift 425 ebenfalls radial einwärts gedrückt und liegt folglich auf der Exzenterumfangsfläche an. Es entsteht aufgrund des höheren Widerstands, der sich der radialen Einwärtsbewegung des Pumpkolbens 430 im Vergleich zum Pumpenstift 425 entgegenstellt ein Spaltraum zwischen dem radial auswärts liegenden Ende des Pumpenstifts 425 und dem Kolbenelement, durch den Fluid aus der Zwischenkammer 427 über den zentralen Kanalabschnitt 428 zum Pumpenauslass 422 strömen kann. Das aus dem Pumpenauslass strömende Fluid setzt die Sperrkammer 390 unter Überdruck. Dieser Überdruck kann durch Vorspannung der Feder 440 über eine Einstellschraube 441 justiert werden.

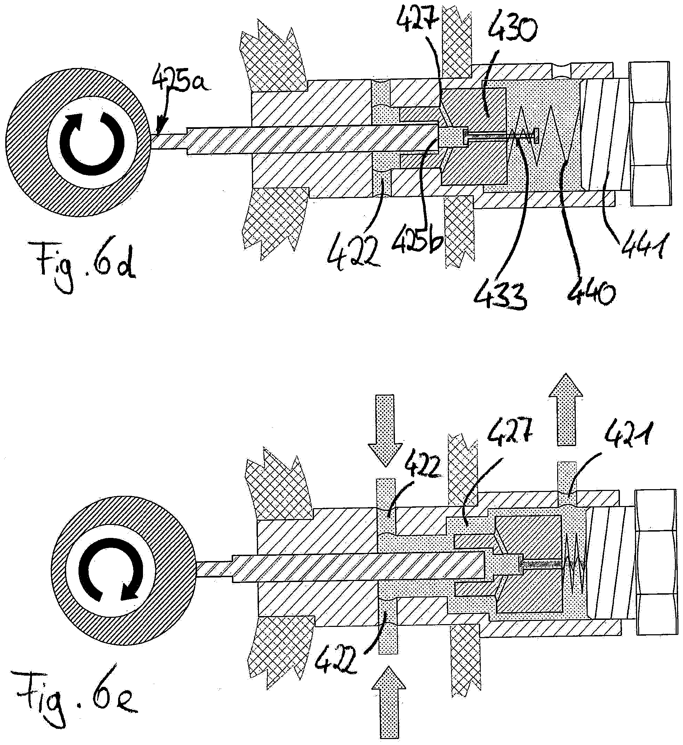

Fig. 6d zeigt die Anordnung der Pumpeinheit im radial inneren Totpunkt. Die Zwischenkammer 427 ist in dieser Position vollständig entleert, der axiale Kanal 431 durch den Ventilkörper 432 noch aufgrund des noch nicht vorliegenden Unterdrucks in der Zwischenkammer geschlossen. Das Kolbenelement 430 wird im direkten Kontakt mit dem radial äußeren Ende des Pumpenstiftes 425 in der radial innersten Position durch den Druck der Feder 440 gehalten.

Fig. 6e zeigt die Anordnung der Pumpeinheit in einer Situation, in der ein Überdruck in der Sperrkammer herrscht. Der Überdruck wirkt auf den Pumpenauslass 422 und drückt hierdurch einerseits den Pumpenstift 425 radial einwärts auf die Exzenterumfangsfläche, andererseits den Pumpenkolben 430 radial auswärts gegen die Federvorspannung der Feder 440. Durch diese radiale Auswärtsbewegung des Pumpenkolbens 430 wird dieser soweit verschoben, dass der Durchlass von Dichtungsfluid aus der Zwischenkammer 427 zum Pumpeneinlass unter radial äußerer Umgehung des Pumpenkolbens 430 freigegeben ist. Daher kann Dichtungsfluid direkt aus der Sperrkammer 440 in Richtung des Pumpeneinlass 421 fließen und der Überdruck durch Abführen dieses Dichtungsfluids in den Zulauf der Pumpeneinheit, also beispielsweise ein daran angeschlossenes Dichtungsfluidreservoir, abgebaut werden.

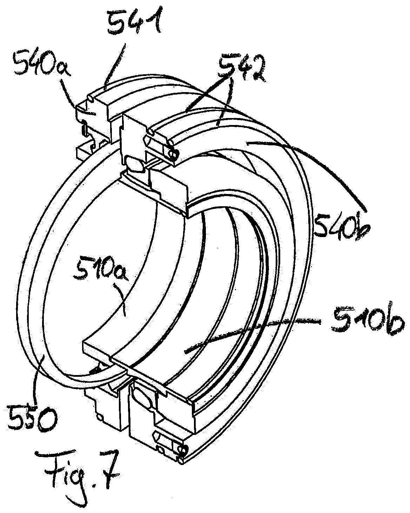

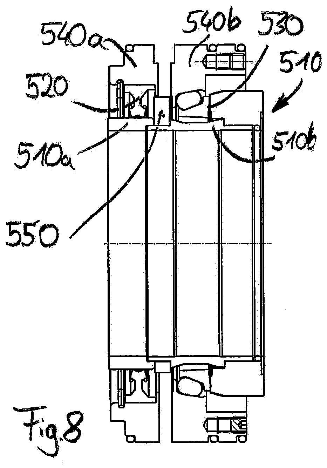

Fig. 7 und 8 zeigen eine Dichtungspatrone, mit der die erfindungsgemäße Dichtungsanordnung hergestellt und deren Verschleißteile in einfacher und schneller Weise ersetzt bzw. ausgetauscht werden können. Die Dichtungspatrone umfasst eine in axialer Richtung zweigeteilte innenliegende Hülse 510, die auf eine Pumpenwelle der Drehkolbenpumpe aufgeschoben und darauf drehmomentfest befestigt werden kann, beispielsweise durch Reib- oder Formschluss. Die Hülse 510 weist ein linkes axiales Teil 510a mit einer äußeren Umfangsfläche auf, auf der ein Radialwellendichtring 520 mit seiner radial innenliegenden Dichtungslippe aufliegt und eine relativ bewegliche Abdichtung bewirkt.

Ein rechter axialer Teil 510b der Hülse 510 wirkt eine äußere Umfangsfläche der Hülse 510 mit einer Gleitringdichtung 530 zusammen, die ebenfalls eine relativ bewegliche Abdichtung gegenüber einer äußeren Umfangsfläche der Hülse 510 bewirkt.

Der Radialwellendichtring 520 ist beidseits wirkend und radial auswärts ortsfest in einer Aufnahmebuchse 540a gehalten. Die Gleitringdichtung 530 ist radial auswärts ortsfest in einer Aufnahmebuchse 540b gehalten. Die Aufnahmebuchsen 540a,b weisen fluchtende äußere Umfangsflächen auf, die abgedichtet durch Dichtungsringe 541,542 in einer entsprechenden zylindrischen Aufnahme im Gehäuse einer Drehkolbenpumpe befestigt werden können.

Zwischen dem Radialwellendichtring 520 und der Gleitringdichtung 530 ist eine Exzenterscheibe 550 angeordnet, die drehmomentfest mit der Hülse 510 verbunden ist und sich folglich bei Montage der Dichtungspatrone um eine Pumpenwelle mit dieser Pumpenwelle mitdreht. Die Exzenterscheibe 550 dient dem Antrieb einer Pumpeinheit, mit der ein Dichtungsfluid mit Druck beaufschlagt und gefördert werden kann.

## Patentansprüche

1. Dichtungsanordnung für die Abdichtung einer Pumpenwelle (12, 13, 112, 113, 212, 213, 312, 313) in einer zur Förderung von Pumpförderfluid ausgebildeten Drehkolbenpumpe (10), umfassend:
- eine Dichtungsfluid-Pumpvorrichtung (20, 120, 220, 320a, 320b) mit einem Pumpeneinlass (21, 121, 221, 321a, 321b, 421) und einem Pumpenauslass (22, 122, 422)
- eine mit dem Pumpenauslass (22, 122, 422) verbundene Sperrkammer (40, 140, 240, 340), die benachbart zu der Pumpkammer der Drehkolbenpumpe (10) angeordnet und gegenüber der Pumpkammer mittels einer die Pumpenwelle (12, 13, 112, 113, 212, 213, 312, 313) umschließenden ersten Wellendichtung abgedichtet ist,
wobei die Sperrkammer (40, 140, 240, 340) über den Pumpenauslass (22, 122, 422) mit einem aus der durch die Dichtungsfluid-Pumpvorrichtung (20, 120, 220, 320a, 320b) erzeugten Fluiddruckdifferenz resultierenden Fluiddruck beaufschlagt wird, und mittels Zusammenwirken dieses Fluiddrucks mit der ersten Wellendichtung die Pumpkammer gegen den Austritt von Pumpförderfluid aus der Pumpkammer entlang der Pumpenwelle (12, 13, 112, 113, 212, 213, 312, 313) abdichtet, **dadurch gekennzeichnet, dass** die Dichtungsfluid-Pumpvorrichtung (20, 120, 220, 320a, 320b) ausgebildet ist, um bei Überschreitung eines vorbestimmten Fluiddrucks in der Sperrkammer (40, 140, 240, 340) den Durchtritt von Fluid vom Pumpenauslass (22, 122, 422) zum Pumpeneinlass (21, 121, 221, 321a, 321b, 421) freizugeben und solcherart einen Austritt von Fluid aus der Sperrkammer (40, 140, 240, 340) durch die Dichtungsfluid-Pumpvorrichtung (20, 120, 220, 320a, 320b) zu eröffnen.

2. Dichtungsanordnung nach Anspruch 1, **dadurch gekennzeichnet, dass** die Dichtungsfluid-Pumpvorrichtung (20, 120, 220, 320a, 320b) umfasst:
- ein Exzenterelement (423) mit einer exzentrisch zu einer Rotationsachse umlaufenden Exzenterumfangsfläche,
- einen mit dem Exzenterelement (423) gekoppelten Flanschanschluss, der zur drehmomentfesten Verbindung mit einer aus einer Pumpkammer der Drehkolbenpumpe (10) herausführenden Pumpenwelle (12, 13, 112, 113, 212, 213, 312, 313) der Drehkolbenpumpe (10) ausgebildet ist,
- eine Pumpeinheit (420), die mit dem Exzenterelement (423) gekoppelt ist, einen Pumpeneinlass (21, 121, 221, 321a, 321b, 421) und einen Pumpenauslass (22, 122, 422) aufweist und ausgebildet ist, um bei Rotation des Exzenterelements (423) in einem Dichtungsfluid eine Fluiddruckdifferenz zwischen Pumpeneinlass (21, 121, 221, 321a, 321b,421) und Pumpenauslass (22, 122, 422) zu erzeugen,
wobei die Pumpeinheit (420) vorzugsweise
- einen Exzenterstift, der an einem ersten Exzenterstiftende auf der Exzenterumfangsfläche des Exzenterelements (423) anliegt,
- einen Pumpkolben (430), mit einer ersten Kolbenfläche, die mit einem zweiten Exzenterstiftende zusammenwirkt und einen mit dem Pumpenauslass (22, 122, 422) verbundenen Pumpenraum begrenzt,
- ein Vorspannungselement, das mit einer zweiten Kolbenfläche, die in Kolbenlängsachse gegenüberliegend zur ersten Kolbenfläche angeordnet ist, zusammenwirkt, und den Pumpkolben (430) elastisch radial in Richtung auf die Exzenterumfangsfläche vorspannt,
- einen die erste mit der zweiten Kolbenfläche verbindenden Durchtrittskanal durch den Pumpkolben (430), der durch ein in eine Schließstellung vorgespanntes Pumpkolbenventil verschlossen wird,
wobei das Pumpkolbenventil einen Ventilkörper mit einer Ventilkörperfläche aufweist, die bei Beaufschlagung der ersten Kolbenfläche mit einem Unterdruck eine Öffnungskraft auf den Ventilkörper bewirkt, die gegen die in Schließstellung wirkende Vorspannung gerichtet ist, und die elastische Kraft des Vorspannungselement eine auf den Pumpkolben (430) wirkende Kraft ausübt, die auf ein in dem Pumpenraum befindliches Fluid einen Fluiddruck ausübt,
umfasst.

3. Dichtungsanordnung nach Anspruch 1 oder 2, **dadurch gekennzeichnet, dass**
- die Sperrkammer (40, 140, 240, 340) als durchströmte Sperrkammer (40, 140, 240, 340) ausgebildet ist und zumindest eine Gleitringdichtung (530) aufweist und die Gleitringdichtung (530) durch einen aus dem Fluiddruck resultierenden Fluidstrom des Dichtungsfluids geschmiert wird, oder
- die Sperrkammer (40, 140, 240, 340) als geschlossene Sperrkammer (40, 140, 240, 340) ausgebildet ist und in der Sperrkammer (40, 140, 240, 340) mittels der von der Dichtungsfluid-Pumpvorrichtung (20, 120, 220, 320a, 320b) erzeugten Fluiddruckdifferenz ein vorbestimmter Fluiddruck aufrechterhalten wird.

4. Dichtungsanordnung nach einem der vorhergehenden Ansprüche, **dadurch gekennzeichnet, dass** die Dichtungsfluid-Pumpvorrichtung (20, 120, 220, 320a, 320b) eine Einstellvorrichtung zur Begrenzung des in der Sperrkammer (40, 140, 240, 340) erzeugten Fluiddrucks aufweist.

5. Dichtungsanordnung nach einem der vorhergehenden Ansprüche, **dadurch gekennzeichnet, dass** der Pumpeneinlass (21, 121, 221, 321a, 321b, 421) mit einem Fluidreservoir (30, 130, 230, 330a, 330b) verbunden ist,
wobei vorzugsweise das Fluidreservoir (30, 130, 230, 330a, 330b) über ein Druckbegrenzungsventil mit der Sperrkammer (40, 140, 240, 340) verbunden ist.

6. Dichtungsanordnung nach einem der vorhergehenden Ansprüche, **gekennzeichnet durch** eine zweite Sperrkammer (290, 390), die die Pumpkammer an einer anderen, beabstandeten Stelle gegen Austritt von Pumpförderfluid abdichtet, wobei
- der Pumpeneinlass (21, 121, 221, 321a, 321b, 421) der Dichtungsfluid-Pumpvorrichtung (20, 120, 220, 320a, 320b) mit einem Fluidreservoir (30, 130, 230, 330a, 330b) verbunden ist,
- die Sperrkammer (40, 140, 240, 340) mit der zweiten Sperrkammer (290, 390) verbunden ist und
- die Sperrkammer (40, 140, 240, 340) oder die zweite Sperrkammer (290, 390) über ein Rückschlagventil mit dem Reservoir verbunden ist.

7. Dichtungsanordnung nach einem der vorhergehenden Ansprüche, **gekennzeichnet durch** eine Steuerungseinheit zur Steuerung des Drucks in der Sperrkammer (40, 140, 240, 340),
wobei vorzugsweise die Steuerungseinheit ausgebildet ist, um einen Druck in der Sperrkammer (40, 140, 240, 340) bzw. den Sperrkammern (40, 140, 240, 340) einzusteuern, der höher ist als ein in der Pumpkammer herrschende Druck,
und wobei vorzugsweise Steuerungseinheit ausgebildet ist, um in vorbestimmten Zeitabständen oder bei vorbestimmten Betriebszuständen den Druck in der Sperrkammer (40, 140, 240, 340) für eine vorbestimmte Zeitdauer zu erhöhen, insbesondere über einen in der Pumpkammer herrschenden Druck zu erhöhen,
und wobei vorzugsweise ein Leckagesensor zur Erfassung einer Leckage aus der Sperrkammer (40, 140, 240, 340) bzw. den Sperrkammern (40, 140, 240, 340) bereitgestellt ist und dass die Steuerungseinheit mit dem Leckagesensor signaltechnisch gekoppelt und ausgebildet ist, um in Abhängigkeit des Sensorsignals des Leckagesensors den Druck in der Sperrkammer (40, 140, 240, 340) bzw. den Sperrkammern (40, 140, 240, 340) einzusteuern, insbesondere indem
- bei einer Leckage unterhalb eines vorbestimmten unteren Leckagegrenzwertes den Druck in der Sperrkammer (40, 140, 240, 340) / den Sperrkammern (40, 140, 240, 340) zu erhöhen, und/oder
- bei einer Leckage oberhalb eines vorbestimmten oberen Leckagegrenzwertes den Druck in der Sperrkammer (40, 140, 240, 340) / den Sperrkammern (40, 140, 240, 340) zu verringern.

8. Dichtungsanordnung nach einem der vorhergehenden Ansprüche, **dadurch gekennzeichnet, dass** die erste Wellendichtung eine Gleitringdichtung (530) ist, insbesondere eine Gleitringdichtung, die ausgebildet ist, um einen hydrodynamisch gebildeten Schmierfilm aufzubauen.

9. Dichtungsanordnung nach einem der vorhergehenden Ansprüche, **gekennzeichnet durch** eine zweite Wellendichtung, welche die Pumpenwelle (12, 13, 112, 113, 212, 213, 312, 313) umschließt und die Sperrkammer (40, 140, 240, 340) an einer der ersten Wellendichtung gegenüberliegenden Seite abdichtet,
wobei vorzugsweise die zweite Wellendichtung ein Radialwellendichtring (520) ist.

10. Drehkolbenpumpe (10), umfassend
- eine Pumpkammer mit einer Pumpkammereinlassöffnung und einer Pumpkammerauslassöffnung,
- zwei auf entsprechend zwei parallel zueinander verlaufenden Pumpenwellen (12, 13, 112, 113, 212, 213, 312, 313) befestigte und miteinander kämmende Drehkolben (216, 217, 316, 317), die bei einander entgegengesetzter Rotation ein Pumpförderfluid von der Pumpkammereinlassöffnung zu der Pumpkammerauslassöffnung fördern,
- einen Antriebsmechanismus, der mit zumindest einer der zwei Pumpenwellen (12, 13, 112, 113, 212, 213, 312, 313) gekoppelt ist zum Antreiben der Drehkolben (216, 217, 316, 317),
**gekennzeichnet durch** eine Dichtungsanordnung mit Sperrkammer (40, 140, 240, 340) nach einem der vorhergehenden Ansprüche, die für eine Abdichtung zwischen dem Antriebsmechanismus und der Pumpkammer angeordnet ist.

11. Drehkolbenpumpe (10), nach Anspruch 10,
**dadurch gekennzeichnet, dass** der Antriebsmechanismus ein in einem Getrieberaum angeordnetes Synchronisierungsgetriebe zur Synchronisierung der Rotation der zwei Pumpenwellen (12, 13, 112, 113, 212, 213, 312, 313) aufweist und die Dichtungsanordnung den Getrieberaum gegenüber der Pumpkammer abdichtet.

12. Drehkolbenpumpe (10), nach Anspruch 10 oder 11
**dadurch gekennzeichnet, dass** die Sperrkammer (40, 140, 240, 340) gegen den Durchtritt von Pumpförderfluid entlang der zwei Pumpenwellen (12, 13, 112, 113, 212, 213, 312, 313) abdichtet,
wobei vorzugsweise eine Dichtungsanordnung nach Anspruch 6 bereitgestellt ist und die zweite Sperrkammer (290, 390) gegen den Durchtritt von Pumpförderfluid entlang der zwei Pumpenwellen (12, 13, 112, 113, 212, 213, 312, 313) gegenüberliegend zu der Sperrkammer (40, 140, 240, 340) abdichtet,
und weiter vorzugsweise die zweite Sperrkammer (290, 390) zwischen der Pumpkammer der Drehkolbenpumpe (10) und einer Lagerungseinheit für die Pumpenwellen (12, 13, 112, 113, 212, 213, 312, 313) der Drehkolbenpumpe (10) angeordnet ist und diese Lagerungseinheit gegen die Pumpkammer abdichtet, wobei in der Sperrkammer (40, 140, 240, 340) ein Dichtungs-Schmierfluid angeordnet ist, welches durch die Dichtungsfluid-Pumpvorrichtung (20, 120, 220, 320a, 320b) gefördert wird, und dass der Pumpenauslass (22, 122, 422) der Dichtungsfluid-Pumpvorrichtung (20, 120, 220, 320a, 320b) mit der Lagerungseinheit in Fluidverbindung steht zur Förderung von Dichtungs-Schmierfluid zu der Lagerungseinheit.

13. Dichtungspatrone für eine Dichtungsanordnung nach einem der vorhergehenden Ansprüche 1-9, umfassend:
- eine erste Wellendichtung mit
o einer inneren Umfangsfläche, die eine Durchlassöffnung für eine Pumpenwelle (12, 13, 112, 113, 212, 213, 312, 313) umgibt und ausgebildet ist zur relativ-bewegten abgedichteten Anordnung um die Pumpenwelle (12, 13, 112, 113, 212, 213, 312, 313),
- eine zweite Wellendichtung mit
o einer inneren Umfangsfläche, die eine Durchlassöffnung für die Pumpenwelle (12, 13, 112, 113, 212, 213, 312, 313) umgibt und ausgebildet ist zur relativ-bewegten abgedichteten Anordnung um die Pumpenwelle (12, 13, 112, 113, 212, 213, 312, 313),
- ein Betätigungselement, das zwischen der ersten und der zweiten Wellendichtung angeordnet ist, drehmomentfest mit der Pumpenwelle (12, 13, 112, 113, 212, 213, 312, 313) koppelbar ist und eine Betätigungsfläche für eine Dichtungsfluid-Pumpvorrichtung (20, 120, 220, 320a, 320b) aufweist,
wobei vorzugsweise die erste Wellendichtung als Gleitringdichtung (530) und/oder dass die zweite Wellendichtung als Radialwellendichtring (520) ausgebildet ist.

## Claims

1. Seal assembly for sealing a pump shaft (12, 13, 112, 113, 212, 213, 312, 313) in a rotary piston pump (10) configured for conveying pump-conveyed fluid, comprising:
- a sealing-fluid pump device (20, 120, 220, 320a, 320b) having a pump inlet (21, 121, 221, 321a, 321b, 421) and a pump outlet (22, 122, 422)
- a blocking chamber (40, 140, 240, 340) which is connected to the pump outlet (22, 122, 422), is disposed adjacent to the pump chamber of the rotary piston pump (10) and is sealed with respect to the pump chamber by means of a first shaft seal which encloses the pump shaft (12, 13, 112, 113, 212, 213, 312, 313),
wherein the blocking chamber (40, 140, 240, 340) is pressurised, via the pump outlet (22, 122, 422), with a fluid pressure resulting from the fluid pressure difference generated by the sealing-fluid pump device (20, 120, 220, 320a, 320b), and seals, by means of the interaction of this fluid pressure with the first shaft seal, the pump chamber to prevent the egress of pump-conveyed fluid from the pump chamber along the pump shaft (12, 13, 112, 113, 212, 213, 312, 313), **characterised in that** the sealing-fluid pump device (20, 120, 220, 320a, 320b) is configured, when a predetermined fluid pressure in the blocking chamber (40, 140, 240, 340) is exceeded, to enable the passage of fluid from the pump outlet (22, 122, 422) to the pump inlet (21, 121, 221, 321a, 321b, 421) and thus to establish an egress of fluid from the blocking chamber (40, 140, 240, 340) through the sealing-fluid pump device (20, 120, 220, 320a, 320b).

2. Seal assembly as claimed in claim 1, **characterised in that** the sealing-fluid pump device (20, 120, 220, 320a, 320b) comprises:
- an eccentric element (423) having an eccentric peripheral surface which is circumferential eccentrically with respect to an axis of rotation,
- a flange connection which is coupled to the eccentric element (423) and is configured for torque-locking connection to a pump shaft (12, 13, 112, 113, 212, 213, 312, 313) of the rotary piston pump (10) which leads out of a pump chamber of the rotary piston pump (10),
- a pump unit (420) which is coupled to the eccentric element (423), has a pump inlet (21, 121, 221, 321a, 321b, 421) and a pump outlet (22, 122, 422) and is configured, upon rotation of the eccentric element (423), to generate in a sealing fluid a fluid pressure difference between the pump inlet (21, 121, 221, 321a, 321b, 421) and the pump outlet (22, 122, 422),
wherein the pump unit (420) preferably comprises:
- an eccentric pin which at a first eccentric pin end lies on the eccentric peripheral surface of the eccentric element (423);
- a pump piston (430) having a first piston surface which interacts with a second eccentric pin end, and delimits a pump space which is connected to the pump outlet (22, 122, 422),
- a pretensioning element which interacts with a second piston surface which, in the piston longitudinal axis, is disposed opposite the first piston surface and pretensions the pump piston (420) elastically in a radial manner in the direction of the eccentric peripheral surface,
- a passage duct through the pump piston (420), which connects the first piston surface to the second piston surface and is closed by means of a pump piston valve which is pretensioned to a closed position,
wherein the pump piston valve has a valve body with a valve body surface which, upon pressurisation of the first piston surface with a negative pressure, produces an opening force on the valve body which is directed against the pretensioning acting in the closed position, and the elastic force of the pretensioning element exerts a force which acts upon the pump piston (430) and exerts a fluid pressure upon a fluid located in the pump space.

3. Seal assembly as claimed in claim 1 or 2, **characterised in that**
- the blocking chamber (40, 140, 240, 340) is designed as a throughflow blocking chamber (40, 140, 240, 340) and has at least one mechanical seal (530), and the mechanical seal (530) is lubricated by means of a fluid flow of the sealing fluid which results from the fluid pressure, or
- the blocking chamber (40, 140, 240, 340) is designed as a closed blocking chamber (40, 140, 240, 340) and a predetermined fluid pressure is maintained in the blocking chamber (40, 140, 240, 340) by means of the fluid pressure difference which is generated by the sealing-fluid pump device (20, 120, 220, 320a, 320b).

4. Seal assembly as claimed in any one of the preceding claims, **characterised in that** the sealing-fluid pump device (20, 120, 220, 320a, 320b) has a setting device for limiting the fluid pressure which is generated in the blocking chamber (40, 140, 240, 340).

5. Seal assembly as claimed in any one of the preceding claims, **characterised in that** the pump inlet (21, 121, 221, 321a, 321b, 421) is connected to a fluid reservoir (30, 130, 230, 330a, 330b),
wherein preferably the fluid reservoir (30, 130, 230, 330a, 330b) is connected to the blocking chamber (40, 140, 240, 340) via a pressure limiting valve.

6. Seal assembly as claimed in any one of the preceding claims, **characterised by** a second blocking chamber (290, 390) which seals the pump chamber at another, spaced-apart location to prevent the egress of pump-conveyed fluid, wherein
- the pump inlet (21, 121, 221, 321a, 321b, 421) of the sealing-fluid pump device (20, 120, 220, 320a, 320b) is connected to a fluid reservoir (30, 130, 230, 330a, 330b),
- the blocking chamber (40, 140, 240, 340) is connected to the second blocking chamber (290, 390) and
- the blocking chamber (40, 140, 240, 340) or the second blocking chamber (290, 390) is connected to the reservoir via a non-return valve.

7. Seal assembly as claimed in any one of the preceding claims, **characterised by** a control unit for controlling the pressure in the blocking chamber (40, 140, 240, 340),
wherein preferably the control unit is configured to initiate a pressure in the blocking chamber(s) (40, 140, 240, 340) which is higher than a pressure prevailing in the pump chamber,
and wherein preferably the control unit is configured to increase the pressure in the blocking chamber (40, 140, 240, 340) for a predetermined time period at predetermined time intervals or in predetermined operating states, in particular to increase said pressure above a pressure prevailing in the pump chamber,
and wherein preferably a leakage sensor is provided for detecting a leakage from the blocking chamber(s) (40, 140, 240, 340), and in that the control unit is coupled to the leakage sensor in terms of signal technology and is configured to initiate the pressure in the blocking chamber(s) (40, 140, 240, 340) in dependence upon the sensor signal of the leakage sensor, in particular by
- increasing the pressure in the blocking chamber(s) (40, 140, 240, 340) in the event of a leakage below a predetermined lower leakage limit value, and/or
- reducing the pressure in the blocking chamber(s) (40, 140, 240, 340) in the event of a leakage above a predetermined upper leakage limit value.

8. Seal assembly as claimed in any one of the preceding claims, **characterised in that** the first shaft seal is a mechanical seal (530), in particular a mechanical seal which is configured to build up a hydrodynamically formed lubricating film.

9. Seal assembly as claimed in any one of the preceding claims, **characterised by** a second shaft seal which encloses the pump shaft (12, 13, 112, 113, 212, 213, 312, 313) and seals the blocking chamber (40, 140, 240, 340) on a side which is opposite the first shaft seal,
wherein preferably the second shaft seal is a radial shaft seal ring (520).

10. Rotary piston pump (10), comprising:
- a pump chamber having a pump chamber inlet opening and a pump chamber outlet opening,
- two intermeshing rotary pistons (216, 217, 316, 317) which are fastened to correspondingly two pump shafts (12, 13, 112, 113, 212, 213, 312, 313) extending in parallel with one another and which in a mutually opposing rotation convey a pump-conveyed fluid from the pump chamber inlet opening to the pump chamber outlet opening,
- a drive mechanism which is coupled to at least one of the two pump shafts (12, 13, 112, 113, 212, 213, 312, 313) in order to drive the rotary pistons (216, 217, 316, 317), **characterised by** a seal assembly comprising a blocking chamber (40, 140, 240, 340) as claimed in any one of the preceding claims, which is arranged for sealing between the drive mechanism and the pump chamber.

11. Rotary piston pump (10) as claimed in claim 10,
**characterised in that** the drive mechanism has a synchronising gear mechanism, which is disposed in a gear mechanism space, for synchronising the rotation of the two pump shafts (12, 13, 112, 113, 212, 213, 312, 313) and the seal assembly seals the gear mechanism space with respect to the pump chamber.

12. Rotary piston pump (10) as claimed in claim 10 or 11,
**characterised in that** the blocking chamber (40, 140, 240, 340) provides a seal to prevent the passage of pump-conveyed fluid along the two pump shafts (12, 13, 112, 113, 212, 213, 312, 313),
wherein preferably a sealing assembly as claimed in claim 6 is provided and the second blocking chamber (290, 390) provides a seal to prevent the passage of pump-conveyed fluid along the two pump shafts (12, 13, 112, 113, 212, 213, 312, 313) opposite the blocking chamber (40, 140, 240, 340),
and further preferably the second blocking chamber (290, 390) is disposed between the pump chamber of the rotary piston pump (10) and a mounting unit for the pump shafts (12, 13, 112, 113, 212, 213, 312, 313) of the rotary piston pump (10) and seals this mounting unit with respect to the pump chamber, wherein a sealing lubrication fluid which is conveyed by the sealing-fluid pump device (20, 120, 220, 320a, 320b) is disposed in the blocking chamber (40, 140, 240, 340), and that the pump outlet (22, 122, 422) of the sealing-fluid pump device (20, 120, 220, 320a, 320b) is in fluid communication with the mounting unit in order to convey sealing lubrication fluid to the mounting unit.

13. Seal cartridge for a seal assembly as claimed in any one of the preceding claims 1-9, comprising:
- a first shaft seal having
∘ an internal peripheral surface which surrounds a passage opening for a pump shaft (12, 13, 112, 113, 212, 213, 312, 313) and is configured to be disposed in a sealed and relatively movable manner about the pump shaft (12, 13, 112, 113, 212, 213, 312, 313),
- a second shaft seal having
∘ an internal peripheral surface which surrounds a passage opening for the pump shaft (12, 13, 112, 113, 212, 213, 312, 313) and is configured to be disposed in a sealed and relatively movable manner about the pump shaft (12, 13, 112, 113, 212, 213, 312, 313),
- an actuating element which is disposed between the first and second shaft seal, can be coupled in a torque-locking manner to the pump shaft (12, 13, 112, 113, 212, 213, 312, 313) and has an actuating surface for a sealing-fluid pump device (20, 120, 220, 320a, 320b),
wherein preferably the first shaft seal is designed as a mechanical seal (530) and/or that the second shaft seal is designed as a radial shaft seal ring (520).

## Revendications

1. Ensemble d'étanchéité pour l'étanchéification d'un arbre de pompe (12, 13, 112, 113, 212, 213, 312, 313) dans une pompe à pistons rotatifs (10) réalisée pour refouler du fluide de refoulement par pompage, comprenant :
- un dispositif de pompage de fluide d'étanchéité (20, 120, 220, 320a, 320b) avec une entrée de pompe (21, 121, 221, 321a, 321b, 421) et une sortie de pompe (22, 122, 422)
- une chambre de barrage (40, 140, 240, 340) reliée à la sortie de pompe (22, 122, 422), qui est disposée de manière adjacente à la chambre de pompage de la pompe à pistons rotatifs (10) et est étanchéifiée par rapport à la chambre de pompage au moyen d'un premier joint d'étanchéité d'arbre entourant l'arbre de pompe (12, 13, 112, 113, 212, 213, 312, 313),
dans lequel la chambre de barrage (40, 140, 240, 340) est soumise à l'action d'une pression de fluide résultant de la différence de pression de fluide produite par le dispositif de pompage de fluide d'étanchéité (20, 120, 220, 320a, 320b) par l'intermédiaire de la sortie de pompe (22, 122, 422) et étanchéifie, au moyen de la coopération de ladite pression de fluide avec le premier joint d'étanchéité, la chambre de pompage pour empêcher la sortie de fluide de refoulement par pompage hors de la chambre de pompage le long de l'arbre de pompe (12, 13, 112, 113, 212, 213, 312, 313), **caractérisé en ce que** le dispositif de pompage de fluide d'étanchéité (20, 120, 220, 320a, 320b) est réalisé pour débloquer le passage de fluide depuis la sortie de pompe (22, 122, 422) vers l'entrée de pompe (21, 121, 221, 321a, 321b, 421) lors du dépassement d'une pression de fluide prédéfinie dans la chambre de barrage (40, 140, 240, 340) et pour ainsi ouvrir une sortie de fluide depuis la chambre de barrage (40, 140, 240, 340) à travers le dispositif de pompage de fluide d'étanchéité (20, 120, 220, 320a, 320b).

2. Ensemble d'étanchéité selon la revendication 1, **caractérisé en ce que** le dispositif de pompage de fluide d'étanchéité (20, 120, 220, 320a, 320b) comprend :
- un élément excentrique (423) avec une surface périphérique excentrique située en périphérie de manière excentrique par rapport à un axe de rotation,
- un raccord de bride couplé à l'élément excentrique (423), qui est réalisé pour être relié de manière solidaire en couple de rotation à un arbre de pompe (12, 13, 112, 113, 212, 213, 312, 313), menant hors d'une chambre de pompage de la pompe à pistons rotatifs (10), de la pompe à pistons rotatifs (10),
- une unité de pompage (420), qui est couplée à l'élément excentrique (423), présente une entrée de pompe (21, 121, 221, 321a, 321b, 421) et une sortie de pompe (22, 122, 422) et est réalisée pour produire lors de la rotation de l'élément excentrique (423) dans un fluide d'étanchéité une différence de pression de fluide entre l'entrée de pompe (21, 121, 221, 321a, 321b, 421) et la sortie de pompe (22, 122, 422),
dans lequel l'unité de pompage (420) comprend de préférence
- une tige excentrique, qui repose sur une première extrémité de tige excentrique sur la surface périphérique excentrique de l'élément excentrique (423),
- un piston de pompage (430) avec une première surface de piston, qui coopère avec une seconde extrémité de tige excentrique et délimite un espace de pompe relié à la sortie de pompe (22, 122, 422),
- un élément de précontrainte, qui coopère avec une deuxième surface de piston, qui est disposée, dans l'axe longitudinal de piston, en vis-à-vis par rapport à la première surface de piston, et qui précontraint de manière élastique radialement en direction de la surface périphérique excentrique le piston de pompe (430),
- un canal de passage reliant la première à la deuxième surface de piston, à travers le piston de pompage (430), qui est fermé par une soupape de piston de pompage précontrainte dans une position de fermeture,
dans lequel la soupape de piston de pompage présente un corps de soupape avec une surface de corps de soupape, qui provoque, lorsque la première surface de piston est soumise à l'action d'une dépression, une force d'ouverture sur le corps de soupape, qui est dirigée dans le sens opposé à la précontrainte agissant dans la position de fermeture, et la force élastique de l'élément de précontrainte exerce une force agissant sur le piston de pompage (430), qui exerce une pression de fluide sur un fluide se trouvant dans l'espace de pompe.

3. Ensemble d'étanchéité selon la revendication 1 ou 2, **caractérisé en ce que**
- la chambre de barrage (40, 140, 240, 340) est réalisée en tant que chambre de barrage (40, 140, 240, 340) traversée et présente au moins une garniture mécanique (530) et la garniture mécanique (530) est lubrifiée par un flux de fluide, résultant de la pression de fluide, du fluide d'étanchéité, ou
- la chambre de barrage (40, 140, 240, 340) est réalisée en tant que chambre de barrage (40, 140, 240, 340) fermée et une pression de fluide prédéfinie est maintenue dans la chambre de barrage (40, 140, 240, 340) au moyen de la différence de pression de fluide produite par le dispositif de pompage de fluide d'étanchéité (20, 120, 220, 320a, 320b).

4. Ensemble d'étanchéité selon l'une quelconque des revendications précédentes, **caractérisé en ce que** le dispositif de pompage de fluide d'étanchéité (20, 120, 220, 320a, 320b) présente un dispositif de réglage pour limiter la pression de fluide produite dans la chambre de barrage (40, 140, 240, 340).

5. Ensemble d'étanchéité selon l'une quelconque des revendications précédentes, **caractérisé en ce que** l'entrée de pompe (21, 121, 221, 321a, 321b, 421) est reliée à un réservoir de fluide (30, 130, 230, 330a, 330b),
dans lequel de préférence le réservoir de fluide (30, 130, 230, 330a, 330b) est relié à la chambre de barrage (40, 140, 240, 340) par l'intermédiaire d'une soupape de limitation de pression.

6. Ensemble d'étanchéité selon l'une quelconque des revendications précédentes, **caractérisé par** une deuxième chambre de barrage (290, 390), qui étanchéifie la chambre de pompage sur un autre emplacement à distance pour empêcher toute sortie de fluide de refoulement par pompage, dans lequel
- l'entrée de pompe (21, 121, 221, 321a, 321b, 421) du dispositif de pompage de fluide d'étanchéité (20, 120, 220, 320a, 320b) est reliée à un réservoir de fluide (30, 130, 230, 330a, 330b),
- la chambre de barrage (40, 140, 240, 340) est reliée à la deuxième chambre de barrage (290, 390), et
- la chambre de barrage (40, 140, 240, 340) ou la deuxième chambre de barrage (290, 390) est reliée au réservoir par l'intermédiaire d'une soupape anti-retour.

7. Ensemble d'étanchéité selon l'une quelconque des revendications précédentes, **caractérisé par** une unité de commande pour commander la pression dans la chambre de blocage (40, 140, 240, 340),
dans lequel de préférence l'unité de commande est réalisée pour contrôler une pression dans la chambre de barrage (40, 140, 240, 340) ou les chambres de barrage (40, 140, 240, 340), qui est plus élevée qu'une pression régnant dans la chambre de pompage,
et dans lequel de préférence l'unité de commande est réalisée pour augmenter, à intervalles de temps prédéfinis ou dans des états de fonctionnement prédéfinis, la pression dans la chambre de barrage (40, 140, 240, 340) pendant une durée prédéfinie, en particulier au-dessus d'une pression régnant dans la chambre de pompage,
et dans lequel de préférence un capteur de fuite est fourni pour détecter une fuite de la chambre de barrage (40, 140, 240, 340) ou des chambres de barrage (40, 140, 240, 340), et que l'unité de commande est couplée par une technique de signaux au capteur de fuite et est réalisée pour contrôler, en fonction du signal de capteur du capteur de fuite, la pression dans la chambre de barrage (40, 140, 240, 340) ou les chambres de barrage (40, 140, 240, 340), en particulier en
- augmentant la pression dans la chambre de barrage (40, 140, 240, 340) ou les chambres de barrage (40, 140, 240, 340) lors d'une fuite à un niveau inférieur à une valeur limite de fuite inférieure prédéfinie, et/ou
- réduisant la pression dans la chambre de barrage (40, 140, 240, 340) ou les chambres de barrage (40, 140, 240, 340) lors d'une fuite à un niveau supérieur à une valeur limite de fuite supérieure prédéfinie.

8. Ensemble d'étanchéité selon l'une quelconque des revendications précédentes, **caractérisé en ce que** le premier joint d'étanchéité d'arbre est une garniture mécanique (530), en particulier une garniture mécanique qui est réalisée pour établir un film lubrifiant formé de manière hydrodynamique.

9. Ensemble d'étanchéité selon l'une quelconque des revendications précédentes, **caractérisé par** un deuxième joint d'étanchéité d'arbre, lequel entoure l'arbre de pompe (12, 13, 112, 113, 212, 213, 312, 313) et étanchéifie la chambre de barrage (40, 140, 240, 340) sur un côté situé en vis-à-vis du premier joint d'étanchéité d'arbre,
dans lequel de préférence le deuxième joint d'étanchéité d'arbre est une bague d'étanchéité radiale pour arbre (520).

10. Pompe à pistons rotatifs (10) comprenant :
- une chambre de pompage avec une ouverture d'entrée de chambre de pompage et une ouverture de sortie de chambre de pompage,
- deux pistons rotatifs (216, 217, 316, 317) fixés sur de manière correspondante deux arbres de pompe (12, 13, 112, 113, 212, 213, 312, 313) s'étendant de manière parallèle l'un par rapport à l'autre et s'engageant l'un avec l'autre, qui refoulent, lors d'une rotation opposée, un fluide de refoulement par pompage depuis l'ouverture d'entrée de chambre de pompage vers l'ouverture de sortie de chambre de pompage,
- un mécanisme d'entraînement, qui est couplé à au moins un des deux arbres de pompe (12, 13, 112, 113, 212, 213, 312, 313) pour entraîner les pistons rotatifs (216, 217, 316, 317),
**caractérisé par** un ensemble d'étanchéité avec une chambre de barrage (40, 140, 240, 340) selon l'une quelconque des revendications précédentes, qui est disposé pour une étanchéification entre le mécanisme d'entraînement et la chambre de pompage.

11. Pompe à pistons rotatifs (10) selon la revendication 10,
**caractérisée en ce que** le mécanisme d'entraînement présente un engrenage de synchronisation disposé dans un espace d'engrenage pour la synchronisation de la rotation des deux arbres de pompe (12, 13, 112, 113, 212, 213, 312, 313) et l'ensemble d'étanchéité étanchéifie l'espace d'engrenage par rapport à la chambre de pompage.

12. Pompe à pistons rotatifs (10) selon la revendication 10 ou 11,
**caractérisée en ce que** la chambre de barrage (40, 140, 240, 340) réalise l'étanchéification pour empêcher le passage de fluide de refoulement par pompage le long des deux arbres de pompe (12, 13, 112, 113, 212, 213, 312, 313),
dans laquelle de préférence un ensemble d'étanchéité selon la revendication 6 est fourni et étanchéifie la deuxième chambre de barrage (290, 390) pour empêcher le passage de fluide de refoulement par pompage le long des deux arbres de pompe (12, 13, 112, 113, 212, 213, 312, 313) en vis-à-vis par rapport à la chambre de barrage (40, 140, 240, 340),
et par ailleurs de préférence la deuxième chambre de barrage (290, 390) est disposée entre la chambre de pompage de la pompe à pistons rotatifs (10) et une unité de support pour les arbres de pompe (12, 13, 112, 113, 212, 213, 312, 313) de la pompe à pistons rotatifs (10) et étanchéifie ladite unité de support par rapport à la chambre de pompage, dans laquelle un fluide de lubrification d'étanchéité, lequel est refoulé par le dispositif de pompage de fluide d'étanchéité (20, 120, 220, 320a, 320b), est disposé dans la chambre de barrage (40, 140, 240, 340), et que la sortie de pompe (22, 122, 422) du dispositif de pompage de fluide d'étanchéité (20, 120, 220, 320a, 320b) est en communication fluidique avec l'unité de support pour refouler du fluide de lubrification d'étanchéité vers l'unité de support.

13. Cartouche d'étanchéité pour un ensemble d'étanchéité selon l'une quelconque des revendications précédentes 1 - 9, comprenant :
- un premier joint d'étanchéité d'arbre avec
∘ une surface périphérique intérieure, qui entoure une ouverture de passage pour un arbre de pompe (12, 13, 112, 113, 212, 213, 312, 313) et est réalisée pour être agencée de manière étanche avec un déplacement relatif autour de l'arbre de pompe (12, 13, 112, 113, 212, 213, 312, 313),
- un deuxième joint d'étanchéité d'arbre avec
∘ une surface périphérique intérieure, qui entoure une ouverture de passage pour l'arbre de pompe (12, 13, 112, 113, 212, 213, 312, 313) et est réalisée pour être disposée de manière étanche par un déplacement relatif autour de l'arbre de pompe (12, 13, 112, 113, 212, 213, 312, 313),
- un élément d'actionnement, qui est disposé entre le premier et le deuxième joint d'étanchéité d'arbre, peut être couplé de manière solidaire en couple de rotation avec l'arbre de pompe (12, 13, 112, 113, 212, 213, 312, 313) et présente une surface d'actionnement pour un dispositif de pompage de fluide d'étanchéité (20, 120, 220, 320a, 320b),
dans laquelle de préférence le premier joint d'étanchéité est réalisé en tant que garniture mécanique (530) et/ou le deuxième joint d'étanchéité est réalisé en tant que bague d'étanchéité radiale pour arbre (520).
